# EUROPEAN PATENT APPLICATION

(11) **EP 4 838 797 A1**
(43) Date of publication of application: **11.11.2026**
(21) Application number: 25751710.2
(22) Date of filing: 08.02.2025
(51) Int. Cl.: H04B 7/0456

(54) **COMMUNICATION METHOD, DEVICE, AND STORAGE MEDIUM**

(30) Priority: 08.02.2024 CN 202410176963
(71) Applicant: Honor Device Co., Ltd., Shenzhen, Guangdong 518040 (CN)
(72) Inventor: ZHENG, Guozeng, Shenzhen, Guangdong 518040 (CN)
(74) Representative: Henselmann, Alexander Gerhard
(86) International application number: PCT/CN2025/076434
(87) International publication number: WO 2025/168100

(57) **Abstract**

Embodiments of this application provide a communication method, a device, and a storage medium, and relate to the field of communication technologies. The method includes: A network device sends a plurality of reference signals to a terminal device, and the terminal device determines a precoding matrix based on the plurality of reference signals. The terminal device may accurately determine the precoding matrix by using the plurality of reference signals sent by the network device, thereby improving accuracy of channel measurement.

## Description

This application claims priority to Chinese Patent Application No. 202410176963.0, filed with the China National Intellectual Property Administration on February 8, 2024 and entitled "COMMUNICATION METHOD, DEVICE, AND STORAGE MEDIUM", which is incorporated herein by reference in its entirety.

### TECHNICAL FIELD

This application relates to the field of communication technologies, and in particular, to a communication method, a device, and a storage medium.

### BACKGROUND

In a communication process, a terminal device may perform channel measurement to determine a channel state.

In a related technology, a network device (for example, a base station) may send a reference signal to a terminal device, and the terminal device determines a precoding matrix by measuring the reference signal. However, when the terminal device is not clear about specific configuration information of the reference signal sent by the network device to the terminal device, the terminal device cannot accurately measure a channel based on the received reference signal, and therefore cannot accurately determine the precoding matrix.

### SUMMARY

Embodiments of this application provide a communication method, a device, and a storage medium. A terminal device may accurately determine a precoding matrix by using a plurality of reference signals sent by a network device, thereby improving accuracy of channel measurement.

According to a first aspect, an embodiment of this application provides a communication method, including: receiving a plurality of reference signals; and determining a precoding matrix based on the plurality of reference signals.

In a possible implementation, the determining a precoding matrix based on the plurality of reference signals includes: determining the precoding matrix based on first information, where the first information indicates a first quantity of antenna ports corresponding to each reference signal in a first dimension and a second quantity of antenna ports corresponding to each reference signal in a second dimension.

In a possible implementation, the first quantity of antenna ports corresponding to each reference signal in the first dimension is the same, and/or the second quantity of antenna ports corresponding to each reference signal in the second dimension is the same.

In a possible implementation, the determining the precoding matrix based on first information includes: determining, based on the first information, a third quantity of antenna ports corresponding to the plurality of reference signals in the first dimension and a fourth quantity of antenna ports corresponding to the plurality of reference signals in the second dimension; determining a first joint basis vector set based on the third quantity and the fourth quantity; and determining the precoding matrix based on the first joint basis vector set.

In a possible implementation, the plurality of reference signals correspond to an antenna port array, and the antenna port array includes an antenna port subarray corresponding to each reference signal, where the third quantity is a quantity of antenna ports corresponding to the antenna port array in the first dimension, and the fourth quantity is a quantity of antenna ports corresponding to the antenna port array in the second dimension.

In a possible implementation, the antenna port array includes M₁ antenna port subarrays in the first dimension, the antenna port array includes M₂ antenna port subarrays in the second dimension, and M₁ and M₂ are respectively integers greater than or equal to 1, where the third quantity is a quantity of antenna ports of M₁ antenna port subarrays in the first dimension; and the fourth quantity is a quantity of antenna ports of M₂ antenna port subarrays in the second dimension.

In a possible implementation, the method further includes: receiving a value of M₁ and a value of M₂.

In a possible implementation, the value of M₁ and the value of M₂ are predefined.

In a possible implementation, the method further includes: sending first indication information related to the precoding matrix, where the first indication information indicates a joint basis vector corresponding to the precoding matrix.

In a possible implementation, the first indication information includes a first parameter and a second parameter, where the first parameter is determined based on the third quantity and oversampling factors of the plurality of reference signals in the first dimension; and the second parameter is determined based on the fourth quantity and oversampling factors of the plurality of reference signals in the second dimension.

In a possible implementation, the determining the precoding matrix based on first information includes: determining, based on the first information, a precoding submatrix corresponding to each reference signal; and determining that the precoding matrix includes the precoding submatrix corresponding to each reference signal.

In a possible implementation, each precoding submatrix is determined based on a second joint basis vector set corresponding to a corresponding reference signal; and the second joint basis vector set is determined based on a quantity of antenna ports of the reference signal in the first dimension and a quantity of antenna ports of the reference signal in the second dimension.

In a possible implementation, a precoding submatrix corresponding to each reference signal includes a first precoding submatrix corresponding to the reference signal and a second precoding submatrix corresponding to the reference signal. The first precoding submatrix and the second precoding submatrix are determined based on a same joint basis vector in a second joint basis vector set corresponding to the reference signal.

In a possible implementation, the method further includes: sending second information related to the precoding matrix, where the second information includes at least one of the following: second indication information, where the second indication information indicates a joint basis vector corresponding to each precoding submatrix, and the joint basis vector corresponding to each precoding submatrix is a joint basis vector in the second joint basis vector set corresponding to a corresponding reference signal; a phase difference between different precoding submatrices; and a phase difference between the first precoding submatrix and the second precoding submatrix that are corresponding to each reference signal, where the first precoding submatrix and the second precoding submatrix are determined based on a same joint basis vector in the second joint basis vector set corresponding to the reference signal.

In a possible implementation, the second indication information includes a third parameter and a fourth parameter, where the third parameter is determined based on a quantity of antenna ports of the reference signal in the first dimension and an oversampling factor of the reference signal in the first dimension; and the fourth parameter is determined based on a quantity of antenna ports of the reference signal in the second dimension and an oversampling factor of the reference signal in the second dimension.

In a possible implementation, the phase difference between different precoding submatrices includes: a difference between a phase associated with an i^{th} precoding submatrix and a phase associated with a 1^{st} precoding submatrix, i is at least one of 2, 3, ..., and M, and M is a quantity of precoding submatrices included in the precoding matrix.

In a possible implementation, the method further includes: sending third indication information and fourth indication information that are related to the precoding matrix, where the third indication information indicates a third joint basis vector set, the third joint basis vector set includes a plurality of joint basis vectors, and the third joint basis vector set includes a part of joint basis vectors in a second joint basis vector set corresponding to each reference signal; and the fourth indication information indicates a joint basis vector corresponding to each precoding submatrix in the third joint basis vector set.

In a possible implementation, there is a correspondence between the plurality of reference signals and a plurality of antenna port subarrays.

In a possible implementation, there is a correspondence between indexes of the plurality of reference signals and indexes of the plurality of antenna port subarrays.

In a possible implementation, there is a correspondence between receiving times of the plurality of reference signals and indexes of the plurality of antenna port subarrays.

In a possible implementation, the receiving a plurality of reference signals includes: receiving the plurality of reference signals within preset duration.

In a possible implementation, the receiving a plurality of reference signals includes: receiving the plurality of reference signals by using a same beam.

According to a second aspect, an embodiment of this application provides a communication method, including: sending a plurality of reference signals, where the plurality of reference signals are used for a terminal device to determine a precoding matrix.

In a possible implementation, the precoding matrix is determined based on first information corresponding to the plurality of reference signals, where the first information indicates a first quantity of antenna ports corresponding to each reference signal in a first dimension and a second quantity of antenna ports corresponding to each reference signal in a second dimension.

In a possible implementation, the first quantity of antenna ports corresponding to each reference signal in the first dimension is the same, and/or the second quantity of antenna ports corresponding to each reference signal in the second dimension is the same.

In a possible implementation, the precoding matrix is determined based on a first joint basis vector, and the first joint basis vector is determined based on a third quantity and a fourth quantity; the third quantity is a quantity of antenna ports corresponding to the plurality of reference signals in the first dimension that is determined based on the first information; and the fourth quantity is a quantity of antenna ports corresponding to the plurality of reference signals in the second dimension that is determined based on the first information.

In a possible implementation, the plurality of reference signals correspond to an antenna port array, and the antenna port array includes an antenna port subarray corresponding to each reference signal, where the third quantity is a quantity of antenna ports corresponding to the antenna port array in the first dimension, and the fourth quantity is a quantity of antenna ports corresponding to the antenna port array in the second dimension.

In a possible implementation, the antenna port array includes M₁ antenna port subarrays in the first dimension, the antenna port array includes M₂ antenna port subarrays in the second dimension, and M₁ and M₂ are respectively integers greater than or equal to 1, where the third quantity is a quantity of antenna ports of M₁ antenna port subarrays in the first dimension; and the fourth quantity is a quantity of antenna ports of M₂ antenna port subarrays in the second dimension.

In a possible implementation, the method further includes: sending a value of M₁ and a value of M₂.

In a possible implementation, the value of M₁ and the value of M₂ are predefined.

In a possible implementation, the method further includes: receiving first indication information related to the precoding matrix, where the first indication information indicates a joint basis vector corresponding to the precoding matrix.

In a possible implementation, the first indication information includes a first parameter and a second parameter, where the first parameter, the first parameter is determined based on the third quantity and oversampling factors of the plurality of reference signals in the first dimension; and the second parameter, the second parameter is determined based on the fourth quantity and oversampling factors of the plurality of reference signals in the second dimension.

In a possible implementation, the precoding matrix includes a precoding submatrix corresponding to each reference signal, where the precoding submatrix corresponding to each reference signal is determined based on the first information.

In a possible implementation, the precoding submatrix is determined based on a second joint basis vector corresponding to a corresponding reference signal; and the second joint basis vector is determined based on a quantity of antenna ports of the reference signal in the first dimension and a quantity of antenna ports of the reference signal in the second dimension.

In a possible implementation, a precoding submatrix corresponding to each reference signal includes a first precoding submatrix corresponding to the reference signal and a second precoding submatrix corresponding to the reference signal. The first precoding submatrix and the second precoding submatrix are determined based on a same joint basis vector in a second joint basis vector set corresponding to the reference signal.

In a possible implementation, the method further includes: receiving second information related to the precoding matrix, where the second information includes at least one of the following: second indication information, where the second indication information indicates a joint basis vector corresponding to each precoding submatrix, and the joint basis vector corresponding to each precoding submatrix is a joint basis vector in the second joint basis vector set corresponding to a corresponding reference signal; a phase difference between different precoding submatrices; and a phase difference between the first precoding submatrix and the second precoding submatrix that are corresponding to each reference signal, where the first precoding submatrix and the second precoding submatrix are determined based on a same joint basis vector in the second joint basis vector set corresponding to the reference signal.

In a possible implementation, the second indication information includes a third parameter and a fourth parameter, where the third parameter, the third parameter is determined based on a quantity of antenna ports of the reference signal in the first dimension and an oversampling factor of the reference signal in the first dimension; and the fourth parameter, the fourth parameter is determined based on a quantity of antenna ports of the reference signal in the second dimension and an oversampling factor of the reference signal in the second dimension.

In a possible implementation, the phase difference between different precoding submatrices includes: a difference between a phase associated with an i^{th} precoding submatrix and a phase associated with a 1^{st} precoding submatrix, i is at least one of 2, 3, ..., and M, and M is a quantity of precoding submatrices included in the precoding matrix.

In a possible implementation, the method further includes: receiving third indication information and fourth indication information that are related to the precoding matrix, where the third indication information indicates a third joint basis vector set, the third joint basis vector set includes a plurality of joint basis vectors, and the third joint basis vector set includes a part of joint basis vectors in a second joint basis vector set corresponding to each reference signal; and the fourth indication information indicates a joint basis vector corresponding to each precoding submatrix in the third joint basis vector set.

In a possible implementation, there is a correspondence between the plurality of reference signals and a plurality of antenna port subarrays.

In a possible implementation, there is a correspondence between indexes of the plurality of reference signals and indexes of the plurality of antenna port subarrays.

In a possible implementation, there is a correspondence between receiving times of the plurality of reference signals and indexes of the plurality of antenna port subarrays.

In a possible implementation, the sending a plurality of reference signals includes: sending the plurality of reference signals within preset duration.

According to a third aspect, an embodiment of this application provides a communication apparatus, including: a communication module, configured to receive a plurality of reference signals; and a determining module, configured to determine a precoding matrix based on the plurality of reference signals.

In a possible implementation, the determining module is specifically configured to determine the precoding matrix based on first information, where the first information indicates a first quantity of antenna ports corresponding to each reference signal in a first dimension and a second quantity of antenna ports corresponding to each reference signal in a second dimension.

In a possible implementation, the first quantity of antenna ports corresponding to each reference signal in the first dimension is the same, and/or the second quantity of antenna ports corresponding to each reference signal in the second dimension is the same.

In a possible implementation, the determining module is specifically configured to: determine, based on the first information, a third quantity of antenna ports corresponding to the plurality of reference signals in the first dimension and a fourth quantity of antenna ports corresponding to the plurality of reference signals in the second dimension; determine a first joint basis vector set based on the third quantity and the fourth quantity; and determine the precoding matrix based on the first joint basis vector set.

In a possible implementation, the plurality of reference signals correspond to an antenna port array, and the antenna port array includes an antenna port subarray corresponding to each reference signal, where the third quantity is a quantity of antenna ports corresponding to the antenna port array in the first dimension, and the fourth quantity is a quantity of antenna ports corresponding to the antenna port array in the second dimension.

In a possible implementation, the antenna port array includes M₁ antenna port subarrays in the first dimension, the antenna port array includes M₂ antenna port subarrays in the second dimension, and M₁ and M₂ are respectively integers greater than or equal to 1, where the third quantity is a quantity of antenna ports of M₁ antenna port subarrays in the first dimension; and the fourth quantity is a quantity of antenna ports of M₂ antenna port subarrays in the second dimension.

In a possible implementation, the communication module is further configured to receive a value of M₁ and a value of M₂.

In a possible implementation, the value of M₁ and the value of M₂ are predefined.

In a possible implementation, the communication module is further configured to send first indication information related to the precoding matrix, where the first indication information indicates a joint basis vector corresponding to the precoding matrix.

In a possible implementation, the first indication information includes a first parameter and a second parameter, where the first parameter is determined based on the third quantity and oversampling factors of the plurality of reference signals in the first dimension; and the second parameter is determined based on the fourth quantity and oversampling factors of the plurality of reference signals in the second dimension.

In a possible implementation, the determining module is specifically configured to: determine, based on the first information, a precoding submatrix corresponding to each reference signal; and determine that the precoding matrix includes the precoding submatrix corresponding to each reference signal.

In a possible implementation, each precoding submatrix is determined based on a second joint basis vector set corresponding to a corresponding reference signal; and the second joint basis vector set is determined based on a quantity of antenna ports of the reference signal in the first dimension and a quantity of antenna ports of the reference signal in the second dimension.

In a possible implementation, a precoding submatrix corresponding to each reference signal includes a first precoding submatrix corresponding to the reference signal and a second precoding submatrix corresponding to the reference signal. The first precoding submatrix and the second precoding submatrix are determined based on a same joint basis vector in a second joint basis vector set corresponding to the reference signal.

In a possible implementation, the communication module is further configured to send second information related to the precoding matrix, where the second information includes at least one of the following: second indication information, where the second indication information indicates a joint basis vector corresponding to each precoding submatrix, and the joint basis vector corresponding to each precoding submatrix is a joint basis vector in the second joint basis vector set corresponding to a corresponding reference signal; a phase difference between different precoding submatrices; and a phase difference between the first precoding submatrix and the second precoding submatrix that are corresponding to each reference signal, where the first precoding submatrix and the second precoding submatrix are determined based on a same joint basis vector in the second joint basis vector set corresponding to the reference signal.

In a possible implementation, the second indication information includes a third parameter and a fourth parameter, where the third parameter is determined based on a quantity of antenna ports of the reference signal in the first dimension and an oversampling factor of the reference signal in the first dimension; and the fourth parameter is determined based on a quantity of antenna ports of the reference signal in the second dimension and an oversampling factor of the reference signal in the second dimension.

In a possible implementation, the phase difference between different precoding submatrices includes: a difference between a phase associated with an i^{th} precoding submatrix and a phase associated with a 1^{st} precoding submatrix, i is at least one of 2, 3, ..., and M, and M is a quantity of precoding submatrices included in the precoding matrix.

In a possible implementation, the communication module is further configured to send third indication information and fourth indication information that are related to the precoding matrix, where the third indication information indicates a third joint basis vector set, the third joint basis vector set includes a plurality of joint basis vectors, and the third joint basis vector set includes a part of joint basis vectors in a second joint basis vector set corresponding to each reference signal; and the fourth indication information indicates a joint basis vector corresponding to each precoding submatrix in the third joint basis vector set.

In a possible implementation, there is a correspondence between the plurality of reference signals and a plurality of antenna port subarrays.

In a possible implementation, there is a correspondence between indexes of the plurality of reference signals and indexes of the plurality of antenna port subarrays.

In a possible implementation, there is a correspondence between receiving times of the plurality of reference signals and indexes of the plurality of antenna port subarrays.

In a possible implementation, the communication module is specifically configured to receive the plurality of reference signals within preset duration.

In a possible implementation, the communication module is specifically configured to receive the plurality of reference signals by using a same beam.

According to a fourth aspect, an embodiment of this application provides a communication apparatus, including: a communication module, configured to send a plurality of reference signals, where the plurality of reference signals are used for a terminal device to determine a precoding matrix.

In a possible implementation, the precoding matrix is determined based on first information corresponding to the plurality of reference signals, where the first information indicates a first quantity of antenna ports corresponding to each reference signal in a first dimension and a second quantity of antenna ports corresponding to each reference signal in a second dimension.

In a possible implementation, the first quantity of antenna ports corresponding to each reference signal in the first dimension is the same, and/or the second quantity of antenna ports corresponding to each reference signal in the second dimension is the same.

In a possible implementation, the precoding matrix is determined based on a first joint basis vector, and the first joint basis vector is determined based on a third quantity and a fourth quantity; the third quantity is a quantity of antenna ports corresponding to the plurality of reference signals in the first dimension that is determined based on the first information; and the fourth quantity is a quantity of antenna ports corresponding to the plurality of reference signals in the second dimension that is determined based on the first information.

In a possible implementation, the plurality of reference signals correspond to an antenna port array, and the antenna port array includes an antenna port subarray corresponding to each reference signal, where the third quantity is a quantity of antenna ports corresponding to the antenna port array in the first dimension, and the fourth quantity is a quantity of antenna ports corresponding to the antenna port array in the second dimension.

In a possible implementation, the antenna port array includes M₁ antenna port subarrays in the first dimension, the antenna port array includes M₂ antenna port subarrays in the second dimension, and M₁ and M₂ are respectively integers greater than or equal to 1, where the third quantity is a quantity of antenna ports of M₁ antenna port subarrays in the first dimension; and the fourth quantity is a quantity of antenna ports of M₂ antenna port subarrays in the second dimension.

In a possible implementation, the communication module is further configured to send a value of M₁ and a value of M₂.

In a possible implementation, the value of M₁ and the value of M₂ are predefined.

In a possible implementation, the communication module is further configured to receive first indication information related to the precoding matrix, where the first indication information indicates a joint basis vector corresponding to the precoding matrix.

In a possible implementation, the first indication information includes a first parameter and a second parameter, where the first parameter, the first parameter is determined based on the third quantity and oversampling factors of the plurality of reference signals in the first dimension; and the second parameter, the second parameter is determined based on the fourth quantity and oversampling factors of the plurality of reference signals in the second dimension.

In a possible implementation, the precoding matrix includes a precoding submatrix corresponding to each reference signal, where the precoding submatrix corresponding to each reference signal is determined based on the first information.

In a possible implementation, each precoding submatrix is determined based on a second joint basis vector corresponding to a corresponding reference signal; and the second joint basis vector is determined based on a quantity of antenna ports of the reference signal in the first dimension and a quantity of antenna ports of the reference signal in the second dimension.

In a possible implementation, a precoding submatrix corresponding to each reference signal includes a first precoding submatrix corresponding to the reference signal and a second precoding submatrix corresponding to the reference signal. The first precoding submatrix and the second precoding submatrix are determined based on a same joint basis vector in a second joint basis vector set corresponding to the reference signal.

In a possible implementation, the communication module is further configured to receive second information related to the precoding matrix, where the second information includes at least one of the following: second indication information, where the second indication information indicates a joint basis vector corresponding to each precoding submatrix, and the joint basis vector corresponding to each precoding submatrix is a joint basis vector in the second joint basis vector set corresponding to a corresponding reference signal; a phase difference between different precoding submatrices; and a phase difference between the first precoding submatrix and the second precoding submatrix that are corresponding to each reference signal, where the first precoding submatrix and the second precoding submatrix are determined based on a same joint basis vector in the second joint basis vector set corresponding to the reference signal.

In a possible implementation, the second indication information includes a third parameter and a fourth parameter, where the third parameter, the third parameter is determined based on a quantity of antenna ports of the reference signal in the first dimension and an oversampling factor of the reference signal in the first dimension; and the fourth parameter, the fourth parameter is determined based on a quantity of antenna ports of the reference signal in the second dimension and an oversampling factor of the reference signal in the second dimension.

In a possible implementation, the phase difference between different precoding submatrices includes: a difference between a phase associated with an i^{th} precoding submatrix and a phase associated with a 1^{st} precoding submatrix, i is at least one of 2, 3, ..., and M, and M is a quantity of precoding submatrices included in the precoding matrix.

In a possible implementation, the communication module is further configured to receive third indication information and fourth indication information that are related to the precoding matrix, where the third indication information indicates a third joint basis vector set, the third joint basis vector set includes a plurality of joint basis vectors, and the third joint basis vector set includes a part of joint basis vectors in a second joint basis vector set corresponding to each reference signal; and the fourth indication information indicates a joint basis vector corresponding to each precoding submatrix in the third joint basis vector set.

In a possible implementation, there is a correspondence between the plurality of reference signals and a plurality of antenna port subarrays.

In a possible implementation, there is a correspondence between indexes of the plurality of reference signals and indexes of the plurality of antenna port subarrays.

In a possible implementation, there is a correspondence between receiving times of the plurality of reference signals and indexes of the plurality of antenna port subarrays.

In a possible implementation, the communication module is specifically configured to send the plurality of reference signals within preset duration.

According to a fifth aspect, an embodiment of this application provides a terminal device, including: a processor and a memory; the memory stores computer-executable instructions; and the processor executes the computer-executable instructions stored in the memory, so that the terminal device performs the method according to the first aspect or any possible implementation of the first aspect.

According to a sixth aspect, an embodiment of this application provides a network device, including: a processor and a memory; the memory stores computer-executable instructions; and the processor executes the computer-executable instructions stored in the memory, so that the network device performs the method according to the second aspect or any possible implementation of the second aspect.

According to a seventh aspect, an embodiment of this application provides a computer-readable storage medium. The computer-readable storage medium stores a computer program or instructions, and the computer program or the instructions are executed by a processor to implement the method according to the first aspect or any possible implementation of the first aspect, or implement the method according to the second aspect or any possible implementation of the second aspect.

According to an eighth aspect, an embodiment of this application provides a computer program product. The computer program product includes a computer program, and when the computer program is run, a computer is enabled to perform the method according to the first aspect or any possible implementation of the first aspect, or the computer is enabled to perform the method according to the second aspect or any possible implementation of the second aspect.

According to a ninth aspect, an embodiment of this application provides a chip or a chip system. The chip or the chip system includes at least one processor and a communication interface, the communication interface and the at least one processor are interconnected via a line, and the at least one processor is configured to run a computer program or instructions, to perform the method according to the first aspect or any possible implementation of the first aspect, or perform the method according to the second aspect or any possible implementation of the second aspect. The communication interface in the chip may be an input/output interface, a pin, a circuit, or the like.

Embodiments of this application provide a communication method, a device, and a storage medium. The method includes: A network device sends a plurality of reference signals to a terminal device, and the terminal device determines a precoding matrix based on the plurality of reference signals. Channel information of a plurality of antenna ports may be accurately reflected by using the plurality of reference signals, and therefore, the terminal device may accurately measure a channel based on the plurality of reference signals, to accurately determine the precoding matrix.

### BRIEF DESCRIPTION OF DRAWINGS

FIG. 1 is a first schematic diagram of an antenna port array according to an embodiment of this application;
FIG. 2 is a diagram of an architecture of a communication system according to an embodiment of this application;
FIG. 3 is a schematic flowchart of a communication method according to an embodiment of this application;
FIG. 4 is a schematic flowchart of another communication method according to an embodiment of this application;
FIG. 5A is a second schematic diagram of an antenna port array according to an embodiment of this application;
FIG. 5B is a third schematic diagram of an antenna port array according to an embodiment of this application;
FIG. 5C is a fourth schematic diagram of an antenna port array according to an embodiment of this application;
FIG. 6 is a schematic flowchart of still another communication method according to an embodiment of this application;
FIG. 7 is a schematic diagram of a structure of a communication apparatus according to an embodiment of this application;
FIG. 8 is a schematic diagram of a structure of another communication apparatus according to an embodiment of this application;
FIG. 9 is a schematic diagram of a structure of a terminal device according to an embodiment of this application; and
FIG. 10 is a schematic diagram of a structure of a network device according to an embodiment of this application.

### DESCRIPTION OF EMBODIMENTS

To clearly describe technical solutions in embodiments of this application, the following briefly describes some terms and technologies in the embodiments of this application.

### 1. Precoding technology

When a channel state is known, a sending device (for example, a network device) may process a to-be-sent signal by using a precoding matrix that matches the channel state, so that a precoded to-be-sent signal adapts to a channel. Therefore, complexity of eliminating impact between channels by a receiving device (for example, a terminal device) is reduced. Therefore, precoding processing is performed on the to-be-sent signal, to improve quality of a received signal. Therefore, by using a precoding technology, the sending device and a plurality of receiving devices may perform transmission on a same time-frequency resource, that is, multi-user multiple-input multiple-output (multi user multiple input multiple output, MU-MIMO) is implemented.

It should be understood that related descriptions about the precoding technology are merely examples for ease of understanding, and are not intended to limit the protection scope of the embodiments of this application. In a specific implementation process, the sending device may further perform precoding in another manner. For example, when channel information (for example, but not limited to a channel matrix) cannot be learned, precoding is performed by using a preset precoding matrix or in a weighted processing manner.

### 2. Antenna port (antenna port)

The antenna port may be understood as a transmit antenna identified by the receiving device, or a transmit antenna that may be distinguished spatially. The transmit antenna is a logical antenna, and one logical antenna may include one or more physical antennas.

### 3. Antenna port array

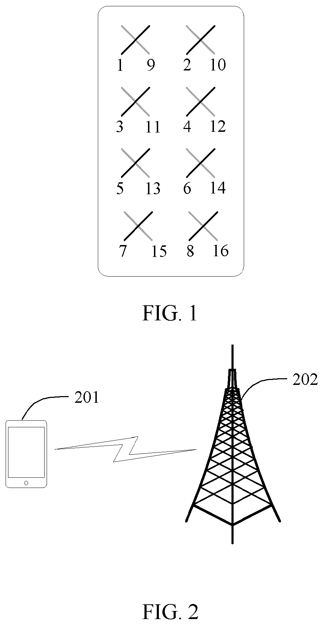

One antenna port array may include a plurality of antenna ports. For example, as shown in FIG. 1, if a quantity of antenna ports of the antenna port array in a first dimension is *N*₁ *=* 4, a quantity of antenna ports of the antenna port array in a second dimension is *N*₂ = 2, and the antenna port array supports antenna dual polarization, a quantity of antenna ports of the antenna port array is *P =* 2*N*₁*N*₂ *= 2* * 4 * 2 = 16. Antenna ports 1, 2, ..., and 8 belong to a first polarization direction; and antenna ports 9, 10, ..., and 16 belong to a second polarization direction.

### 4. Quantity of antenna ports of a reference signal

If a base station transmits one reference signal by using P antenna ports in one antenna port array, a quantity of antenna ports of the reference signal is P. For example, if an antenna port array shown in FIG. 1 is used to transmit a reference signal, a quantity of antenna ports of the reference signal is 16.

### 5. Precoding matrix

The terminal device may determine a precoding matrix based on channel measurement. For example, the precoding matrix may be constructed by using the following formula: ${p}_{l} = \left[\begin{matrix}1 {e}^{j \frac{2 πl}{{O}_{1} {N}_{1}}} … {e}^{j \frac{2 πl \left({N}_{1}-1\right)}{{O}_{1} {N}_{1}}} \\ 1\end{matrix}\right] \begin{matrix}{N}_{1} > 1 \\ {N}_{1} = 1\end{matrix} ; l = 0 , 1 , … , {N}_{1} ⋅ {O}_{1} - 1$ ${q}_{m} = \left[\begin{matrix}1 {e}^{j \frac{2 πm}{{O}_{2} {N}_{2}}} … {e}^{j \frac{2 πm \left({N}_{2}-1\right)}{{O}_{2} {N}_{2}}} \\ 1\end{matrix}\right] \begin{matrix}{N}_{2} > 1 \\ {N}_{2} = 1\end{matrix} ; m = 0 , 1 , … , {N}_{2} ⋅ {O}_{2} - 1$ ${W}_{1} = {w}_{1} ⋅ {w}_{2} = \left[\begin{matrix}{v}_{l , m} & 0 \\ 0 & {v}_{l , m}\end{matrix}\right] \left[\begin{matrix}1 \\ {e}^{{jπφ}_{1}}\end{matrix}\right] = \left[\begin{matrix}{\left({p}_{l}⊗{q}_{m}\right)}^{T} & 0 \\ 0 & {\left({p}_{l}⊗{q}_{m}\right)}^{T}\end{matrix}\right] \left[\begin{matrix}1 \\ {e}^{{jπφ}_{1}}\end{matrix}\right]$

*N*₁ represents a quantity of antenna ports of an antenna port array in a first dimension, and *N*₂ represents a quantity of antenna ports of an antenna port array in a second dimension; *P =* 2*N*₁*N*₂ is a quantity of antenna ports of one reference signal, where 2 indicates dual-polarization; *O*₁ represents an oversampling factor of an antenna port array in a first dimension; *O*₂ represents an oversampling factor of an antenna port array in a second dimension; *pₗ* is a first base vector, and a dimension of the first base vector (or a quantity of candidate first base vectors) is determined based on *N*₁ and *O*₁; *qₘ* is a second basis vector, and a dimension of the second basis vector (or a quantity of candidate second basis vectors) is determined based on *N*₂ and *O*₂; *v_{l,m}* is a Kronecker product of *pₗ* and *qₘ*, and is referred to as a joint basis vector set; *φ*₁ represents phase changes in different polarization directions; *W*₁ represents a precoding matrix of a layer; *w*₁ is a block matrix, and sub-blocks on a diagonal are two same joint basis vectors, and are joint basis vectors respectively corresponding to two polarization directions; and *w*₂ represents a phase difference between precoding matrices corresponding to two polarization directions.

### 6. Other terms

In the embodiments of this application, words such as "first" and "second" are used to distinguish between same items or similar items with basically same functions and effects. For example, first information and second information are merely used to distinguish between different information, but not used to limit a sequence thereof. A person skilled in the art may understand that the words such as "first" and "second" do not limit a quantity or an execution order, and the words such as "first" and "second" do not indicate a definite difference.

It should be noted that, in the embodiments of this application, the word "example" or "for example" is used to represent giving an example, an illustration, or a description. Any embodiment or design solution described as "example" or "for example" in this application should not be construed as being preferred or advantageous over another embodiment or design solution. To be precise, the use of the term such as "exemplary" or "for example" is intended to present a related concept in a specific manner.

In the embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. A character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In the embodiments of this application, the first dimension and the second dimension are spatial dimensions, and the first dimension is different from the second dimension. For example, the first dimension may be a horizontal dimension, and the second dimension may be a vertical dimension. Specific directions of the first dimension and the second dimension are not limited in the embodiments of this application.

To better understand the communication method provided in the embodiments of this application, the following first describes an architecture of a communication system in the embodiments of this application.

For example, FIG. 2 is a diagram of an architecture of a communication system according to an embodiment of this application. As shown in FIG. 2, the communication system 200 includes a terminal device 201 and a network device 202, and the terminal device 201 performs wireless communication with the network device 202.

The terminal device involved in the embodiments of this application may also be referred to as a terminal, may be a device with a wireless transceiver function, and may be deployed on land, including indoor or outdoor, handheld or vehicle-mounted; may be deployed on water (for example, on a ship); or may be deployed in the air (for example, on an airplane, a balloon, or a satellite). The terminal device may be user equipment (user equipment, UE), where the UE includes a handheld device, an onboard device, a wearable device, or a computing device that has a wireless communication function. For example, the UE may be a mobile phone (mobile phone), a tablet computer, or a computer with a wireless transceiver function. The terminal device may further be a virtual reality (virtual reality, VR) terminal device, an augmented reality (augmented reality, AR) terminal device, a wireless terminal device in industrial control, a wireless terminal device in self driving, a wireless terminal device in remote medical, a wireless terminal device in a smart grid, a wireless terminal device in a smart city (smart city), a wireless terminal device in a smart home (smart home), or the like. In the embodiments of this application, an apparatus configured to implement a function of the terminal device may be a terminal device, or may be an apparatus that can support the terminal device in implementing the function, for example, a chip system. The apparatus may be installed in the terminal device.

The network device in the embodiments of this application may be a device having a wireless transceiver function. The network device may be a base station NodeB, an evolved base station eNodeB, a base station in a 5G mobile communication system or a new radio (new radio, NR) communication system, a base station in a future mobile communication system (such as 6G), or the like. In the embodiments of this application, an apparatus configured to implement a function of the network device may be the network device, or may be an apparatus, for example, a chip system, that can support the network device in implementing the function. The apparatus may be installed in the network device.

The technical solutions provided in the embodiments of this application may be applied to a long term evolution (long term evolution, LTE) architecture, and may further be applied to a universal mobile telecommunications system (universal mobile telecommunications system, UMTS) terrestrial radio access network (UMTS terrestrial radio access network, UTRAN) architecture, or a global system for mobile communication (global system for mobile communication, GSM)/enhanced data rate for GSM evolution (enhanced data rate for GSM evolution, EDGE) radio access network (GSM EDGE radio access network, GERAN) architecture. In addition, the technical solutions provided in the embodiments of this application may further be applied to any other wireless communication system having a similar structure and function, for example, a public land mobile network (public land mobile network, PLMN) system, a 5G communication system, or a communication system after 5G, for example, 6G. This is not limited in the embodiments of this application. The 5G mobile communication system may be a non-standalone (non-standalone, NSA) networking or a standalone (standalone, SA) networking.

The technical solutions provided in this application may be further applied to machine type communication (machine type communication, MTC), long term evolution-machine (Long Term Evolution-machine, LTE-M), a device-to-device (device-to device, D2D) network, a machine-to-machine (machine to machine, M2M) network, an internet of things (internet of things, IoT) network, or other networks. The IoT network may include, for example, internet of vehicles. A communication manner in the internet of vehicles system is collectively referred to as vehicle-to-X (vehicle to X, V2X, where X may represent anything). For example, the V2X may include: vehicle-to-vehicle (vehicle to vehicle, V2V) communication, vehicle-to-infrastructure (vehicle to infrastructure, V2I) communication, vehicle-to-pedestrian (vehicle to pedestrian, V2P) communication, vehicle-to-network (vehicle to network, V2N) communication, or the like.

Wireless communication between communication devices may include: wireless communication between a network device and a terminal device, wireless communication between a network device and a network device, and wireless communication between a terminal device and a terminal device. In the embodiments of this application, the term "wireless communication" may also be referred to as "communication", and the term "communication" may also be described as "data transmission", "information transmission", or "transmission". A person skilled in the art may use the technical solutions provided in the embodiments of this application to perform wireless communication between a network device and a terminal device, for example, wireless communication between an access network device and a terminal device.

Based on the problem in background, an embodiment of this application provides a communication method. A network device sends a plurality of reference signals to a terminal device, and the terminal device may accurately measure a channel based on the plurality of reference signals, to accurately determine a precoding matrix.

The technical solutions of this application are described in detail with reference to specific embodiments below. It should be noted that the following embodiments may exist alone or may be combined with each other. Same or similar content, for example, explanations and descriptions of terms or nouns and explanations and descriptions of steps, may be mutually referenced in different embodiments, and is not described again.

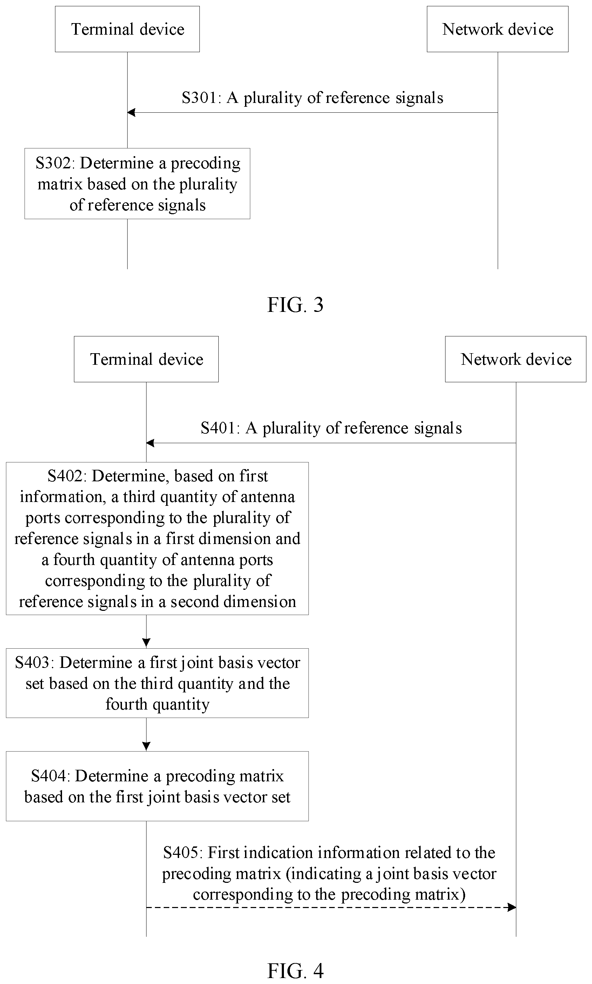

FIG. 3 is a schematic flowchart of a communication method according to an embodiment of this application. As shown in FIG. 3, the communication method includes the following steps.

S301: A network device sends a plurality of reference signals to a terminal device.

In other words, the terminal device receives the plurality of reference signals sent by the network device.

After determining the plurality of reference signals, the network device may send the plurality of reference signals to the terminal device.

The network device may determine a quantity of reference signals based on a quantity of antenna ports corresponding to a precoding matrix.

For example, if the quantity of antenna ports corresponding to the precoding matrix is 48, the network device may determine two reference signals, where one reference signal is transmitted on 32 antenna ports, and the other reference signal is transmitted on 16 antenna ports; and if the quantity of antenna ports corresponding to the precoding matrix is 64, the network device may determine two reference signals, and each reference signal is transmitted on 32 antenna ports.

In a possible implementation, the network device may send a plurality of reference signals within preset duration.

Correspondingly, the terminal device receives the plurality of reference signals within preset duration.

The terminal device can maintain power consistency and phase continuity within the preset duration.

The preset duration may be one slot or two slots, and a specific value of the preset duration is not limited in this application.

The network device sends a plurality of reference signals within preset duration, and the terminal device receives the plurality of reference signals within preset duration, so that accuracy of the precoding matrix may be improved.

In a possible implementation, the terminal device may receive a plurality of reference signals by using a same beam (or a same spatial filter).

The terminal device receives the plurality of reference signals by using the same beam, to ensure that a finally determined precoding matrix reflects only digital precoding information.

In a possible implementation, there is a correspondence between the plurality of reference signals and a plurality of antenna port subarrays.

One antenna port subarray corresponds to one antenna panel.

The plurality of reference signals are in a one-to-one correspondence with the plurality of antenna port subarrays.

The correspondence between the plurality of reference signals and the plurality of antenna port subarrays may be represented in the following two manners.

Manner 1: There is a correspondence between indexes of the plurality of reference signals and indexes of the plurality of antenna port subarrays.

For example, the plurality of reference signals may correspond to the plurality of antenna port subarrays based on an index value or in a random manner.

If there are three reference signals with indexes 1, 2, and 3 respectively, and three antenna port subarrays with indexes 1, 2, and 3 respectively, reference signal 1 may correspond to antenna port subarray 1, reference signal 2 may correspond to antenna port subarray 2, and reference signal 3 may correspond to antenna port subarray 3; or reference signal 1 may correspond to antenna port subarray 3, reference signal 2 may correspond to antenna port subarray 2, and reference signal 3 may correspond to antenna port subarray 1; or reference signal 1 may correspond to antenna port subarray 2, reference signal 2 may correspond to antenna port subarray 3, and reference signal 3 may correspond to antenna port subarray 1.

For another example, an f value may be further determined based on indexes of the antenna port subarray in the first dimension and the second dimension. The plurality of reference signals may correspond to the plurality of antenna port subarrays based on index values of the reference signals and f values or in a random manner.

The f value may be determined by using the following formula:
$f \left(i, j\right) = \left(i-1\right) ∗ {M}_{2} + j$

*i* represents an *ith* antenna port subarray in the first dimension, *j* represents a *jth* antenna port subarray in the second dimension, where *i* = 1, 2, ..., M₁; *and j* = 1, 2, ..., M₂, M₁ represents a quantity of antenna port subarrays in the first dimension, and M₂ represents a quantity of antenna port subarrays in the second dimension.

If there are three reference signals with indexes 1, 2, and 3 respectively, three antenna port subarrays with f values f1, f2, and f3 respectively, where f1<f2<f3, reference signal 1 may correspond to an antenna port subarray with an f value of f1, reference signal 2 may correspond to an antenna port subarray with an f value of f2, and reference signal 3 may correspond to an antenna port subarray with an f value of f3; or reference signal 1 may correspond to an antenna port subarray with an f value of f3, reference signal 2 may correspond to an antenna port subarray with an f value of f2, and reference signal 3 may correspond to an antenna port subarray with an f value of f1; or reference signal 1 may correspond to an antenna port subarray with an f value of f2, reference signal 2 may correspond to an antenna port subarray with an f value of f3, and reference signal 3 may correspond to an antenna port subarray with an f value of f1.

Manner 2: There is a correspondence between receiving times of the plurality of reference signals and indexes of the plurality of antenna port subarrays.

For example, the plurality of reference signals may correspond to the plurality of antenna port subarrays based on receiving times of the reference signals and index values of the antenna port subarrays or in a random manner.

If there are three reference signals, times at which the terminal device receives the three reference signals are t1, t2, and t3 respectively, where t1<t2<t3, and there are three antenna port subarrays with indexes 1, 2, and 3 respectively, a reference signal with a receiving time of t1 may correspond to antenna port subarray 1, a reference signal with a receiving time of t2 may correspond to antenna port subarray 2, and a reference signal with a receiving time of t3 may correspond to antenna port subarray 3; or a reference signal with a receiving time of t1 may correspond to antenna port subarray 3, a reference signal with a receiving time of t2 may correspond to antenna port subarray 2, and a reference signal with a receiving time of t3 may correspond to antenna port subarray 1; or a reference signal with a receiving time of t1 may correspond to antenna port subarray 3, a reference signal with a receiving time of t2 may correspond to antenna port subarray 1, and a reference signal with a receiving time of t3 may correspond to antenna port subarray 2.

For still another example, an f value may be further determined based on an index of the antenna port subarray. The plurality of reference signals may correspond to the plurality of antenna port subarrays based on receiving times of the reference signals and f values or in a random manner.

If there are three reference signals, times at which the terminal device receives the three reference signals are t1, t2, and t3 respectively, where t1<t2<t3, and there are three antenna port subarrays with f values f1, f2, and f3 respectively, where f1<f2<f3, a reference signal with a receiving time of t1 may correspond to an antenna port subarray with an f value of f1, a reference signal with a receiving time of t2 may correspond to an antenna port subarray with an f value of f2, and a reference signal with a receiving time of t3 may correspond to an antenna port subarray with an f value of f3; or a reference signal with a receiving time of t1 may correspond to an antenna port subarray with an f value of f3, a reference signal with a receiving time of t2 may correspond to an antenna port subarray with an f value of f2, and a reference signal with a receiving time of t3 may correspond to an antenna port subarray with an f value of f1; or a reference signal with a receiving time of t1 may correspond to an antenna port subarray with an f value of f1, a reference signal with a receiving time of t2 may correspond to an antenna port subarray with an f value of f3, and a reference signal with a receiving time of t3 may correspond to an antenna port subarray with an f value of f2.

S302: The terminal device determines a precoding matrix based on the plurality of reference signals.

In a possible implementation, the terminal device may determine the precoding matrix in the following manner:
determining the precoding matrix based on first information, where the first information indicates a first quantity of antenna ports corresponding to each reference signal in a first dimension and a second quantity of antenna ports corresponding to each reference signal in a second dimension.

The terminal device may determine the precoding matrix based on the first information in the following manners.

Manner 1: The terminal device determines, based on the first information, a third quantity of antenna ports corresponding to the plurality of reference signals in the first dimension and a fourth quantity of antenna ports corresponding to the plurality of reference signals in the second dimension; determines a first joint basis vector set based on the third quantity and the fourth quantity; and determines the precoding matrix based on the first joint basis vector set.

The terminal device may determine the first joint basis vector set and the precoding matrix based on the foregoing formula.

Manner 2: The terminal device may determine, based on the first information, a precoding submatrix corresponding to each reference signal, where the precoding matrix includes the precoding submatrix corresponding to each reference signal.

The terminal device may determine the precoding submatrix with reference to the foregoing formula based on the first quantity of antenna ports corresponding to each reference signal in the first dimension and the second quantity of antenna ports corresponding to each reference signal in the second dimension.

In a possible implementation, the first quantity of antenna ports corresponding to each reference signal in the first dimension is the same, and/or the second quantity of antenna ports corresponding to each reference signal in the second dimension is the same.

When the first quantity of antenna ports corresponding to each reference signal in the first dimension is the same, and the second quantity of antenna ports corresponding to each reference signal in the second dimension is the same, the first information may include only one first quantity and one second quantity, or may separately include a first quantity and a second quantity of each reference signal.

For example, if there are two reference signals, a first quantity of antenna ports corresponding to each reference signal in the first dimension is 4, and a second quantity of antenna ports corresponding to each reference signal in the second dimension is 2, the first information may be [4, 2], or may be $\left[\begin{matrix}4 , 2 \\ 4 , 2\end{matrix}\right]$.

When the first quantity of antenna ports corresponding to each reference signal in the first dimension is the same, and the second quantity of antenna ports corresponding to each reference signal in the second dimension is different from each other, the first information may include one first quantity and the second quantity of each reference signal, or may separately include the first quantity and the second quantity of each reference signal.

For example, if there are two reference signals, a first quantity of antenna ports corresponding to a 1^{st} reference signal in the first dimension is 4, and a second quantity of antenna ports corresponding to the 1^{st} reference signal in the second dimension is 4; and a first quantity of antenna ports corresponding to a 2^{nd} reference signal in the first dimension is 4, and a second quantity of antenna ports corresponding to the 2^{nd} reference signal in the second dimension is 2. In this case, the first information may be $\left[4, \begin{matrix}4 \\ 2\end{matrix}\right]$, or may be $\left[\begin{matrix}4 , 4 \\ 4 , 2\end{matrix}\right]$.

When the first quantity of antenna ports corresponding to each reference signal is different from each other in the first dimension, and the second quantity of antenna ports corresponding to each reference signal is the same in the second dimension, the first information may include the first quantity of each reference signal and one second quantity, or may separately include the first quantity and the second quantity of each reference signal.

For example, if there are two reference signals, a first quantity of antenna ports corresponding to a 1^{st} reference signal in the first dimension is 4, and a second quantity of antenna ports corresponding to the 1^{st} reference signal in the second dimension is 4; and a first quantity of antenna ports corresponding to a 2^{nd} reference signal in the first dimension is 2, and a second quantity of antenna ports corresponding to the 2^{nd} reference signal in the second dimension is 4. In this case, the first information may be $\left[\begin{matrix}2 \\ 4\end{matrix}, 4\right]$, or may be $\left[\begin{matrix}4 , 4 \\ 2 , 4\end{matrix}\right]$.

When the first quantity of antenna ports corresponding to each reference signal is different from each other in the first dimension, and the second quantity of antenna ports corresponding to each reference signal is different from each other in the second dimension, the first information may separately include the first quantity and the second quantity of each reference signal.

For example, if there are two reference signals, a first quantity of antenna ports corresponding to a 1^{st} reference signal in the first dimension is 4, and a second quantity of antenna ports corresponding to the 1^{st} reference signal in the second dimension is 2; and a first quantity of antenna ports corresponding to a 2^{nd} reference signal in the first dimension is 2, and a second quantity of antenna ports corresponding to the 2^{nd} reference signal in the second dimension is 4. In this case, the first information may be $\left[\begin{matrix}4 , 2 \\ 2 , 4\end{matrix}\right]$.

In the embodiment shown in FIG. 3, the network device sends a plurality of reference signals to the terminal device, and the terminal device determines a precoding matrix based on the plurality of reference signals. On a premise that a maximum quantity of antenna ports supported by a single reference signal is not increased, channel information of a plurality of antenna ports may be accurately reflected by using the plurality of reference signals, thereby avoiding that the terminal device cannot distinguish reference signals sent from different antenna ports at a same moment. Further, the terminal device may accurately measure a channel based on the plurality of reference signals, to accurately determine the precoding matrix.

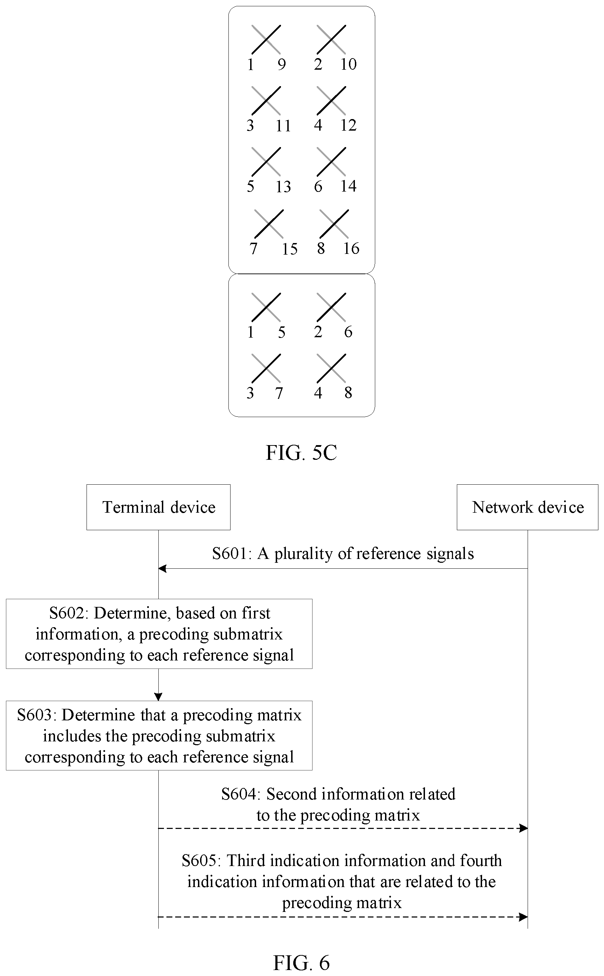

Based on the foregoing embodiment, the following describes in detail the communication method of this application with reference to FIG. 4 and FIG. 6.

FIG. 4 is a schematic flowchart of another communication method according to an embodiment of this application. As shown in FIG. 4, the communication method includes the following steps.

S401: A network device sends a plurality of reference signals to a terminal device.

It should be noted that for an execution process of S401, refer to the execution process of S301. Details are not described herein again.

S402: The terminal device determines, based on first information, a third quantity of antenna ports corresponding to the plurality of reference signals in a first dimension and a fourth quantity of antenna ports corresponding to the plurality of reference signals in a second dimension.

The first information indicates a first quantity of antenna ports corresponding to each reference signal in the first dimension and a second quantity of antenna ports corresponding to each reference signal in the second dimension.

In a possible implementation, the plurality of reference signals correspond to an antenna port array, and the antenna port array includes an antenna port subarray corresponding to each reference signal, where the third quantity is a quantity of antenna ports corresponding to the antenna port array in the first dimension, and the fourth quantity is a quantity of antenna ports corresponding to the antenna port array in the second dimension.

In a possible implementation, the antenna port array includes M₁ antenna port subarrays in the first dimension, the antenna port array includes M₂ antenna port subarrays in the second dimension, and M₁ and M₂ are respectively integers greater than or equal to 1, where the third quantity is a quantity of antenna ports of M₁ antenna port subarrays in the first dimension; and the fourth quantity is a quantity of antenna ports of M₂ antenna port subarrays in the second dimension.

If a quantity of antenna ports of each of M₁ antenna port subarrays is the same in the first dimension, and the quantity of antenna ports of each antenna port subarray is N₁ in the first dimension, the third quantity is M₁*N₁.

If the quantity of antenna ports of each of M₁ antenna port subarrays is different from each other in the first dimension, and a quantity of antenna ports of an i^{th} antenna port subarray is N_{i,1} in the first dimension, the third quantity is ${\sum }_{i = 1}^{i = {M}_{1}} {N}_{i , 1}$.

If a quantity of antenna ports of each of M₂ antenna port subarrays is the same in the second dimension, and the quantity of antenna ports of each antenna port subarray is N₂ in the first dimension, the fourth quantity is M₂*N₂.

If the quantity of antenna ports of each of M₂ antenna port subarrays is different from each other in the second dimension, and a quantity of antenna ports of a j^{th} antenna port subarray is N_{j,1} in the second dimension, the fourth quantity is ${\sum }_{j = 1}^{j = {M}_{2}} {N}_{j , 1}$.

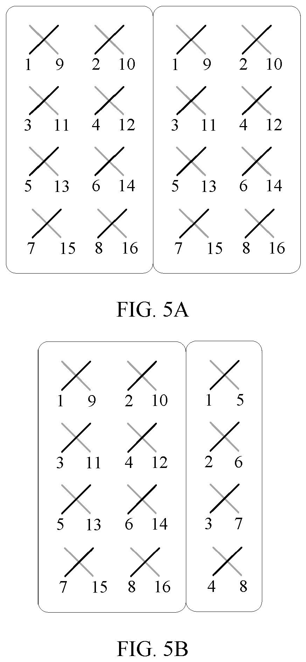

For example, as shown in FIG. 5A, if there are two reference signals, and one reference signal corresponds to one antenna port subarray, a quantity of antenna ports of each antenna port subarray is 4 in the first dimension, and a quantity of antenna ports of each antenna port subarray is 2 in the second dimension. Two antenna port subarrays form an antenna port array, where the antenna port array includes one antenna port subarray in the first dimension, and includes two antenna port subarrays in the second dimension. A quantity (that is, the third quantity) of antenna ports corresponding to the antenna port array in the first dimension is 1*4=4, and a quantity (that is, the fourth quantity) of antenna ports corresponding to the antenna port array in the second dimension is 2*2=4.

For another example, as shown in FIG. 5B, if there are two reference signals, a 1^{st} reference signal corresponds to a 1^{st} antenna port subarray, a quantity of antenna ports of the 1^{st} antenna port subarray is 4 in the first dimension, and a quantity of antenna ports of the 1^{st} antenna port subarray is 2 in the second dimension; a 2^{nd} reference signal corresponds to a 2^{nd} antenna port subarray, a quantity of antenna ports of the 2^{nd} antenna port subarray is 4 in the first dimension, and a quantity of antenna ports of the 2^{nd} antenna port subarray is 1 in the second dimension; the two antenna port subarrays form an antenna port array, where the antenna port array includes one antenna port subarray in the first dimension, and includes two antenna port subarrays in the second dimension; and a quantity (that is, the third quantity) of antenna ports corresponding to the antenna port array in the first dimension is 1*4=4, and a quantity (that is, the fourth quantity) of antenna ports corresponding to the antenna port array in the second dimension is 2+1=3.

For still another example, as shown in FIG. 5C, if there are two reference signals, a 1^{st} reference signal corresponds to a 1^{st} antenna port subarray, a quantity of antenna ports of the 1^{st} antenna port subarray is 4 in the first dimension, and a quantity of antenna ports of the 1^{st} antenna port subarray is 2 in the second dimension; a 2^{nd} reference signal corresponds to a 2^{nd} antenna port subarray, a quantity of antenna ports of the 2^{nd} antenna port subarray is 2 in the first dimension, and a quantity of antenna ports of the 2^{nd} antenna port subarray is 2 in the second dimension; the two antenna port subarrays form an antenna port array, where the antenna port array includes two antenna port subarrays in the first dimension, and includes one antenna port subarray in the second dimension; and a quantity (that is, the third quantity) of antenna ports corresponding to the antenna port array in the first dimension is 4+2=6, and a quantity (that is, the fourth quantity) of antenna ports corresponding to the antenna port array in the second dimension is 2*1=2.

In a possible implementation, the network device may send a value of M₁ and a value of M₂ to the terminal device, that is, the terminal device receives the value of M₁and the value of M₂ sent by the network device.

In a possible implementation, the value of M₁ and the value of M₂ may alternatively be predefined.

The value of M₁ and the value of M₂ may be predefined in the following manners.

### Manner 1: One predefined value

For example, it is predefined that M₁ = 1, and M₂ = *N,* or M₁ = *N,* and M₂ = 1, where N is a quantity of reference signals.

### Manner 2: Two predefined values

A preset threshold is set, and predefined values of M₁ and M₂ when N is less than the preset threshold are different from predefined values of M₁ and M₂ when N is greater than or equal to the preset domain value.

For example, when N is less than the preset threshold, it is predefined that M₁ = 1, and M₂ *= N,* or M₁ *= N,* and M₂ = 1; and when N is greater than or equal to the preset threshold, it is predefined that M₁ = 2, and M₂ = *N*/2, or M₁ = *N*/2, and M₂ = 2.

S403: The terminal device determines a first joint basis vector set based on the third quantity and the fourth quantity.

The first joint basis vector set may be determined with reference to the related formula in the foregoing precoding matrix construction manner.

S404: The terminal device determines a precoding matrix based on the first joint basis vector set.

The precoding matrix may be determined with reference to the related formula in the foregoing precoding matrix construction manner.

This embodiment of this application provides a method for determining a precoding matrix based on a plurality of reference signals. Specifically, the terminal device may accurately measure the channel based on the plurality of reference signals, and may further accurately determine a quantity of antenna ports corresponding to each of the plurality of reference signals in different dimensions. The terminal device may accurately determine, based on quantities of antenna ports corresponding to each reference signal in different dimensions, quantities of antenna ports corresponding to the plurality of reference signals in different dimensions, and may accurately determine the first joint basis vector set based on the quantity of antenna ports corresponding to the plurality of reference signals in different dimensions, thereby accurately determining the precoding matrix.

If the terminal device further needs to feed back related information about the precoding matrix to the network device, step S405 may be further included.

S405: The terminal device sends first indication information related to the precoding matrix to the network device, where the first indication information indicates a joint basis vector corresponding to the precoding matrix.

In other words, the network device receives the first indication information related to the precoding matrix that is sent by the terminal device.

In a possible implementation, the first indication information may include a first parameter and a second parameter, where the first parameter is determined based on the third quantity and oversampling factors of the plurality of reference signals in the first dimension; and the second parameter is determined based on the fourth quantity and oversampling factors of the plurality of reference signals in the second dimension.

A product of the third quantity and the oversampling factors of the plurality of reference signals is denoted as P in the first dimension, a maximum value of the first parameter is P-1, and a minimum value of the second parameter is 0. An overhead of feeding back the second parameter is $\left⌈{log}_{2}P\right⌉$ bits.

A product of the fourth quantity and the oversampling factors of the plurality of reference signals is denoted as Q in the second dimension, a maximum value of the second parameter is Q-1, and a minimum value of the first parameter is 0. An overhead of feeding back the first parameter is $\left⌈{log}_{2}Q\right⌉$ bits.

After receiving the first parameter and the second parameter that are reported by the terminal device, the network device may determine, based on the foregoing formula, the joint basis vector corresponding to the precoding matrix that is in the first joint basis vector set. The first indication information related to the precoding matrix that is determined based on the first information is reported, so that the network device may perform precoding on a data channel transmitted via the plurality of antenna port subarrays, which facilitates improving data signal transmission efficiency.

FIG. 6 is a schematic flowchart of still another communication method according to an embodiment of this application. As shown in FIG. 6, the communication method includes the following steps.

S601: A network device sends a plurality of reference signals to a terminal device.

It should be noted that for an execution process of S601, refer to the execution process of S301. Details are not described herein again.

S602: The terminal device determines, based on first information, a precoding submatrix corresponding to each reference signal.

For any reference signal, a precoding submatrix corresponding to the reference signal is determined based on a second joint basis vector set corresponding to the reference signal; and the second joint basis vector set is determined based on a quantity of antenna ports of the reference signal in the first dimension and a quantity of antenna ports of the reference signal in the second dimension.

The second joint basis vector set and the precoding submatrix may be determined with reference to the related formula in the foregoing precoding matrix construction manner.

If a quantity of antenna ports of each of the plurality of reference signals is the same in the first dimension, and a quantity of antenna ports of each of the plurality of reference signals is the same in the second dimension, a second joint basis vector set associated with each reference signal is the same.

In a possible implementation, for any reference signal, a precoding submatrix corresponding to the reference signal includes a first precoding submatrix corresponding to the reference signal and a second precoding submatrix corresponding to the reference signal. The first precoding submatrix and the second precoding submatrix are determined based on a same joint basis vector in a second joint basis vector set corresponding to the reference signal.

The first precoding submatrix and the second precoding submatrix respectively correspond to different antenna layout manners, for example, different polarization directions.

S603: The terminal device determines that a precoding matrix includes the precoding submatrix corresponding to each reference signal.

The precoding submatrix in the precoding matrix may be arranged by using at least one of the following parameters: an index of the reference signal; a receiving time of the reference signal; and an antenna layout manner.

For example, the precoding submatrix in the precoding matrix may be arranged in the following manners.

Manner 1: Arrange the precoding submatrix in the precoding matrix based on the index of the reference signal.

For example, a precoding submatrix corresponding to a reference signal with a smallest reference signal index is a 1^{st} precoding submatrix in the precoding matrix; a precoding submatrix corresponding to a reference signal with a second smallest reference signal index is a 2^{nd} precoding submatrix in the precoding matrix; and by analogy, a precoding submatrix corresponding to a reference signal with a largest reference signal index is an N^{th} precoding submatrix in the precoding matrix.

For another example, a precoding submatrix corresponding to a reference signal with a largest reference signal index is a 1^{st} precoding submatrix in the precoding matrix; a precoding submatrix corresponding to a reference signal with a second largest reference signal index is a 2^{nd} precoding submatrix in the precoding matrix; and by analogy, a precoding submatrix corresponding to a reference signal with a smallest reference signal index is an N^{th} precoding submatrix in the precoding matrix.

Manner 2: Arrange the precoding submatrix in the precoding matrix based on the receiving time of the reference signal.

For example, a precoding submatrix corresponding to a reference signal with an earliest reference signal receiving time is a 1^{st} precoding submatrix in the precoding matrix; a precoding submatrix corresponding to a reference signal with a second earliest reference signal receiving time is a 2^{nd} precoding submatrix in the precoding matrix; and by analogy, a precoding submatrix corresponding to a reference signal with a latest reference signal receiving time is an N^{th} precoding submatrix in the precoding matrix.

For another example, a precoding submatrix corresponding to a reference signal with a latest reference signal receiving time is a 1^{st} precoding submatrix in the precoding matrix; a precoding submatrix corresponding to a reference signal with a second latest reference signal receiving time is a 2^{nd} precoding submatrix in the precoding matrix; and by analogy, a precoding submatrix corresponding to a reference signal with an earliest reference signal receiving time is an N^{th} precoding submatrix in the precoding matrix.

Manner 3: Arrange the precoding submatrix in the precoding matrix based on the index of the reference signal and the antenna layout manner.

The precoding matrix first arranges a precoding submatrix corresponding to a first type of antenna layout manner, and then arranges a precoding submatrix corresponding to a second type of antenna layout manner. A precoding submatrix corresponding to each type of antenna layout manner is arranged based on the index of the reference signal.

For example, a first precoding submatrix corresponding to a reference signal with a smallest reference signal index is a 1^{st} precoding submatrix in the precoding matrix; a first precoding submatrix corresponding to a reference signal with a second smallest reference signal index is a 2^{nd} precoding submatrix in the precoding matrix; and by analogy, a first precoding submatrix corresponding to a reference signal with a largest reference signal index is an N^{th} precoding submatrix in the precoding matrix. Subsequently, a second precoding submatrix corresponding to a reference signal with a smallest reference signal index is an (N+1)^{th} precoding submatrix in the precoding matrix; a second precoding submatrix corresponding to a reference signal with a second smallest reference signal index is an (N+2)^{th} precoding submatrix in the precoding matrix; and by analogy, a second precoding submatrix corresponding to a reference signal with a largest reference signal index is a (2N)^{th} precoding submatrix in the precoding matrix.

For another example, a first precoding submatrix corresponding to a reference signal with a largest reference signal index is a 1^{st} precoding submatrix in the precoding matrix; a first precoding submatrix corresponding to a reference signal with a second largest reference signal index is a 2^{nd} precoding submatrix in the precoding matrix; and by analogy, a first precoding submatrix corresponding to a reference signal with a smallest reference signal index is an N^{th} precoding submatrix in the precoding matrix. Subsequently, a second precoding submatrix corresponding to a reference signal with a largest reference signal index is an (N+1)^{th} precoding submatrix in the precoding matrix; a second precoding submatrix corresponding to a reference signal with a second largest reference signal index is an (N+2)^{th} precoding submatrix in the precoding matrix; and by analogy, a second precoding submatrix corresponding to a reference signal with a smallest reference signal index is a (2N)^{th} precoding submatrix in the precoding matrix.

For still another example, a second precoding submatrix corresponding to a reference signal with a largest reference signal index is a 1^{st} precoding submatrix in the precoding matrix; a second precoding submatrix corresponding to a reference signal with a second largest reference signal index is a 2^{nd} precoding submatrix in the precoding matrix; and by analogy, a second precoding submatrix corresponding to a reference signal with a smallest reference signal index is an N^{th} precoding submatrix in the precoding matrix. Subsequently, a first precoding submatrix corresponding to a reference signal with a largest reference signal index is an (N+1)^{th} precoding submatrix in the precoding matrix; a first precoding submatrix corresponding to a reference signal with a second largest reference signal index is an (N+2)^{th} precoding submatrix in the precoding matrix; and by analogy, a first precoding submatrix corresponding to a reference signal with a smallest reference signal index is a (2N)^{th} precoding submatrix in the precoding matrix.

Manner 4: Arrange the precoding submatrix in the precoding matrix based on the receiving time of the reference signal and the antenna layout manner.

The precoding matrix first arranges a precoding submatrix corresponding to a first type of antenna layout manner, and then arranges a precoding submatrix corresponding to a second type of antenna layout manner. A precoding submatrix corresponding to each type of antenna layout manner is arranged based on the receiving time of the reference signal.

For example, a first precoding submatrix corresponding to a reference signal with an earliest reference signal receiving time is a 1^{st} precoding submatrix in the precoding matrix; a first precoding submatrix corresponding to a reference signal with a second earliest reference signal receiving time is a 2^{nd} precoding submatrix in the precoding matrix; and by analogy, a first precoding submatrix corresponding to a reference signal with a latest reference signal receiving time is an N^{th} precoding submatrix in the precoding matrix. Subsequently, a second precoding submatrix corresponding to a reference signal with an earliest reference signal receiving time is an (N+1)^{th} precoding submatrix in the precoding matrix; a second precoding submatrix corresponding to a reference signal with a second earliest reference signal receiving time is an (N+2)^{th} precoding submatrix in the precoding matrix; and by analogy, a second precoding submatrix corresponding to a reference signal with a latest reference signal receiving time is a (2N)^{th} precoding submatrix in the precoding matrix.

For another example, a first precoding submatrix corresponding to a reference signal with a latest reference signal receiving time is a 1^{st} precoding submatrix in the precoding matrix; a first precoding submatrix corresponding to a reference signal with a second latest reference signal receiving time is a 2^{nd} precoding submatrix in the precoding matrix; and by analogy, a first precoding submatrix corresponding to a reference signal with an earliest reference signal receiving time is an N^{th} precoding submatrix in the precoding matrix. Subsequently, a second precoding submatrix corresponding to a reference signal with a latest reference signal receiving time is an (N+1)^{th} precoding submatrix in the precoding matrix; a second precoding submatrix corresponding to a reference signal with a second latest reference signal receiving time is an (N+2)^{th} precoding submatrix in the precoding matrix; and by analogy, a second precoding submatrix corresponding to a reference signal with an earliest reference signal receiving time is a (2N)^{th} precoding submatrix in the precoding matrix.

For still another example, a second precoding submatrix corresponding to a reference signal with a latest reference signal receiving time is a 1^{st} precoding submatrix in the precoding matrix; a second precoding submatrix corresponding to a reference signal with a second latest reference signal receiving time is a 2^{nd} precoding submatrix in the precoding matrix; and by analogy, a second precoding submatrix corresponding to a reference signal with an earliest reference signal receiving time is an N^{th} precoding submatrix in the precoding matrix. Subsequently, a first precoding submatrix corresponding to a reference signal with a latest reference signal receiving time is an (N+1)^{th} precoding submatrix in the precoding matrix; a first precoding submatrix corresponding to a reference signal with a second latest reference signal receiving time is an (N+2)^{th} precoding submatrix in the precoding matrix; and by analogy, a first precoding submatrix corresponding to a reference signal with an earliest reference signal receiving time is a (2N)^{th} precoding submatrix in the precoding matrix.

This embodiment of this application provides another method for determining a precoding matrix based on a plurality of reference signals. Specifically, the terminal device may accurately measure the channel based on the plurality of reference signals, and may further accurately determine a quantity of antenna ports corresponding to each of the plurality of reference signals in different dimensions. The terminal device may accurately determine, based on quantities of antenna ports corresponding to each reference signal in different dimensions, the precoding submatrix, thereby accurately determining the precoding matrix.

If the terminal device further needs to feed back related information about the precoding matrix to the network device, step S604 or step S605 may be further included.

S604: The terminal device sends second information related to the precoding matrix to the network device.

In other words, the network device receives the second information related to the precoding matrix that is sent by the terminal device.

The second information may include at least one of the following.
(1) Second indication information, where the second indication information indicates a joint basis vector corresponding to each precoding submatrix, and the joint basis vector corresponding to each precoding submatrix is a joint basis vector in a second joint basis vector set corresponding to a reference signal corresponding to the precoding submatrix.

For example, if the precoding matrix includes two precoding submatrices, the second indication information may indicate joint basis vectors respectively corresponding to the two precoding submatrices.

In a possible implementation, the second indication information includes a third parameter and a fourth parameter, where the third parameter is determined based on a quantity of antenna ports of the reference signal in the first dimension and an oversampling factor of the reference signal in the first dimension; and the fourth parameter is determined based on a quantity of antenna ports of the reference signal in the second dimension and an oversampling factor of the reference signal in the second dimension.

If the precoding matrix includes a plurality of precoding submatrices, the second indication information may include a plurality of third parameters and a plurality of fourth parameters, and one precoding submatrix corresponds to one third parameter and one fourth parameter.

For a precoding submatrix corresponding to any reference signal, a product of a quantity of antenna ports of the reference signal in the first dimension and an oversampling factor of the reference signal in the first dimension is denoted as K, and a product of a quantity of antenna ports of the reference signal in the second dimension and an oversampling factor of the reference signal in the second dimension is denoted as L. A maximum value of the third parameter may be K-1, and a minimum value of the third parameter is 0. An overhead of feeding back the third parameter is $\left⌈{log}_{2}K\right⌉$ bits. A maximum value of the fourth parameter may be L-1, and a minimum value of the fourth parameter is 0. An overhead of feeding back the fourth parameter is $\left⌈{log}_{2}L\right⌉$ bits.

(2) Phase difference between different precoding submatrices.

In a possible implementation, the phase difference between different precoding submatrices includes: a difference between a phase associated with an i^{th} precoding submatrix and a phase associated with a 1^{st} precoding submatrix, i is at least one of 2, 3, ..., and M, and M is a quantity of precoding submatrices included in the precoding matrix.

For example, if the precoding matrix includes three precoding submatrices, where a phase associated with a 1^{st} precoding submatrix is 0, a difference between a phase associated with a 2^{nd} precoding submatrix and the phase associated with the 1^{st} precoding submatrix is *θ*₁, and a difference between a phase associated with a 3^{rd} precoding submatrix and the phase associated with the 1^{st} precoding submatrix is *θ*₂, the terminal device may report *θ*₁ and *θ*₂ to the network device.

(3) Phase difference between a first precoding submatrix and a second precoding submatrix that are corresponding to each reference signal.

If there are two reference signals, and a phase difference between a first precoding submatrix and a second precoding submatrix that are corresponding to each reference signal is reported, two phase differences are reported.

The phase difference between the first precoding submatrix and the second precoding submatrix that are corresponding to each reference signal may also be referred to as a polarization phase difference.

In a possible implementation, the second information may be used for precoding matrices corresponding to a plurality of reference signals within an entire frequency domain range. In this case, the second information may be referred to as wideband precoding information. The second information may alternatively be used to determine precoding matrices corresponding to the plurality of reference signals in different frequency domain subbands within the frequency domain range. In this case, the second information may be referred to as subband precoding information. If the terminal device needs to report a plurality of pieces of subband precoding information, the terminal device may send a plurality of pieces of second information to the network device, and each piece of second information corresponds to one frequency domain subband. Further, the plurality of pieces of subband precoding information may be associated with second indication information in same second information, that is, the terminal device may send second indication information in one piece of second information and information other than the second indication information in the plurality of pieces of second information to the network device. Information other than the second indication information in each piece of second information corresponds to one frequency domain subband. Furthermore, the plurality of pieces of subband precoding information may be associated with second indication information in same second information and a phase difference between different precoding submatrices in the second information. That is, the terminal device may send, to the network device, second indication information in one piece of second information and a phase difference between different precoding submatrices in one piece of second information, and a phase difference between a first precoding submatrix and a second precoding submatrix that are corresponding to each reference signal in a plurality of pieces of second information. A phase difference between a first precoding submatrix and a second precoding submatrix that are corresponding to each reference signal in each piece of second information corresponds to one frequency domain subband.

The following describes content included in the second information with reference to a specific example.

Example 1: It is assumed that the precoding matrix is as follows: ${W}_{1} = \left[\begin{matrix}{{v}^{˜}}_{{l}_{1} , {m}_{1}} & 0 & 0 & 0 \\ 0 & {{v}^{˜}}_{{l}_{2} , {m}_{2}} & 0 & 0 \\ 0 & 0 & {{v}^{˜}}_{{l}_{1} , {m}_{1}} & 0 \\ 0 & 0 & 0 & {{v}^{˜}}_{{l}_{2} , {m}_{2}}\end{matrix}\right] \left[\begin{matrix}1 \\ {e}^{{jπθ}_{1}} \\ {e}^{{jπφ}_{1}} \\ {e}^{{jπφ}_{1}} ⋅ {e}^{{jπθ}_{1}}\end{matrix}\right] = \left[\begin{matrix}{{v}^{˜}}_{{l}_{1} , {m}_{1}} \\ {e}^{{jπθ}_{1}} ⋅ {{v}^{˜}}_{{l}_{2} , {m}_{2}} \\ {e}^{{jπφ}_{1}} ⋅ {{v}^{˜}}_{{l}_{1} , {m}_{1}} \\ {e}^{{jπφ}_{1}} ⋅ {e}^{{jπθ}_{1}} ⋅ {{v}^{˜}}_{{l}_{2} , {m}_{2}}\end{matrix}\right]$

The precoding matrix includes four precoding submatrices. A 1^{st} precoding submatrix is *ṽ*_{*l*₁*,m*₁}, a 2^{nd} precoding submatrix is *e*^{*jπθ*₁} *· ṽ*_{*l*₂,*m*₂}, a 3^{rd} precoding submatrix is *e*^{*jπφ*₁} · *ṽ*_{*l*₁,*m*₁}, and a 4^{th} precoding submatrix is *e*^{*jπφ*1} · *e*^{*jπθ*1} · *ṽ*_{*l*₂,*m*₂}. The 1^{st} precoding submatrix and the 3^{rd} precoding submatrix are associated with a first reference signal (the two precoding submatrices respectively correspond to different antenna polarization directions), and the 2^{nd} precoding submatrix and the 4^{th} precoding submatrix are associated with a second reference signal (the two precoding submatrices respectively correspond to different antenna polarization directions). The 1^{st} precoding submatrix and the 3^{rd} precoding submatrix are associated with a same joint basis vector *ṽ*_{*l*₁,*m*₁}; and the 2^{nd} precoding submatrix and the 4^{th} precoding submatrix are associated with a same joint basis vector *ṽ*_{*l*₂,*m*₂}. A phase difference between precoding submatrices of different reference signals is *θ*₁ in a same polarization direction, and a polarization phase difference between precoding submatrices of a same reference signal is *φ*₁ in two polarization directions.

Based on the precoding matrix in Example 1, the second information may include value information of *l*₁, *m*₁ and *l*₂, *m*₂, *θ*₁, and *φ*₁. If the subband precoding information needs to be fed back, the value information of *l*₁, *m*₁ and *l*₂, *m*₂, and a plurality of *θ*₁ and *φ*₁ may be reported, and each *θ*₁ and *φ*₁ corresponds to one frequency domain subband. Alternatively, if the subband precoding information needs to be fed back, the value information of *l*₁, *m*₁ and *l*₂, *m*₂, *θ*₁, and a plurality of *φ*₁ may be reported, and each *φ*₁ corresponds to one frequency domain subband.

Example 2: It is assumed that the precoding matrix is as follows: ${W}_{1} = \left[\begin{matrix}{{v}^{˜}}_{{l}_{1} , {m}_{1}} & 0 & 0 & 0 \\ 0 & {{v}^{˜}}_{{l}_{1} , {m}_{1}} & 0 & 0 \\ 0 & 0 & {{v}^{˜}}_{{l}_{2} , {m}_{2}} & 0 \\ 0 & 0 & 0 & {{v}^{˜}}_{{l}_{2} , {m}_{2}}\end{matrix}\right] \left[\begin{matrix}1 \\ {e}^{{jπφ}_{1}} \\ {e}^{{jπθ}_{1}} \\ {e}^{{jπθ}_{1}} ⋅ {e}^{{jπφ}_{2}}\end{matrix}\right] = \left[\begin{matrix}{{v}^{˜}}_{{l}_{1} , {m}_{1}} \\ {e}^{{jπφ}_{1}} ⋅ {{v}^{˜}}_{{l}_{1} , {m}_{1}} \\ {e}^{{jπθ}_{1}} ⋅ {{v}^{˜}}_{{l}_{2} , {m}_{2}} \\ {e}^{{jπθ}_{1}} ⋅ {e}^{{jπφ}_{2}} ⋅ {{v}^{˜}}_{{l}_{2} , {m}_{2}}\end{matrix}\right]$

The precoding matrix includes four precoding submatrices. A 1^{st} precoding submatrix is *ṽ*_{*l*1*,m*1}, a 2^{nd} precoding submatrix is *e*^{*jπφ*1} · *ṽ*_{*l*1*,m*1}, a 3^{rd} precoding submatrix is *e*^{*jπθ*1} *· ṽ*_{*l*₂,*m*₂}, and a 4^{th} precoding submatrix is *e*^{*jπθ*1} · *e*^{*jπφ*₂} · *ṽ*_{*l*₂,*m*₂}. The 1^{st} precoding submatrix and the 2^{nd} precoding submatrix are associated with the first reference signal (the two precoding submatrices respectively correspond to different antenna polarization directions), and the 3^{rd} precoding submatrix and the 4^{th} precoding submatrix are associated with the second reference signal (the two precoding submatrices respectively correspond to different antenna polarization directions). The 1^{st} precoding submatrix and the 2^{nd} precoding submatrix are associated with a same joint basis vector *ṽ*_{*l*₁,*m*₁}; and the 3^{rd} precoding submatrix and the 4^{th} precoding submatrix are associated with a same joint basis vector *ṽ*_{*l*₂,*m*₂}. A phase difference between precoding submatrices of different reference signals is *θ*₁ in a same polarization direction, and a polarization phase difference between precoding submatrices of a same reference signal is *φ*₁ and *φ*₂ in two polarization directions.

Based on the precoding matrix in Example 2, the second information may include value information of *l*₁, *m*₁ and *l*₂, *m*₂, *θ*₁, and *φ*₁ and *φ*₂. If the subband precoding information needs to be fed back, the value information of *l*₁, *m*₁ and *l*₂, *m*₂, and a plurality of *θ*₁ and *φ*₁ and *φ*₂ may be reported, and each *θ*₁ and *φ*₁ and *φ*₂ corresponds to one frequency domain subband. Alternatively, if the subband precoding information needs to be fed back, the value information of *l*₁, *m*₁ and *l*₂, *m*₂, *θ*₁, and a plurality of *φ*₁ and *φ*₂ may be reported, and each *φ*₁ and *φ*₂ corresponds to one frequency domain subband.

The second information related to the precoding matrix that is determined based on the first information is reported, so that the network device may perform precoding on a data channel transmitted via the plurality of antenna port subarrays, which facilitates improving data signal transmission efficiency.

S605: The terminal device sends third indication information and fourth indication information that are related to the precoding matrix to the network device.

In other words, the terminal device receives the third indication information and the fourth indication information related to the precoding matrix that are sent by the network device.

The third indication information may indicate a third joint basis vector set, the third joint basis vector set includes a plurality of joint basis vectors, and the third joint basis vector set includes a part of joint basis vectors in a second joint basis vector set corresponding to each reference signal.

The third indication information may include any one of the following.
(1) The third indication information may indicate a plurality of third parameters and a plurality of fourth parameters, and the plurality of joint basis vectors are in a one-to-one correspondence with the plurality of third parameters and the plurality of fourth parameters.
(2) The third indication information may indicate a parameter selection rule.

For example, if the quantity of antenna ports of the antenna port subarray corresponding to the reference signal is *N*₁ in the first dimension, the oversampling factor is *O*₁, the quantity of antenna ports of the antenna port subarray corresponding to the reference signal is *N*₂ in the second dimension, the oversampling factor is *O*₂, and a quantity of joint basis vectors included in the third joint basis vector set is 4, the parameter selection rule indicated by the third indication information may be one of ${C}_{{N}_{1} ⋅ {O}_{1}}^{2}$ combinations and one of ${C}_{{N}_{2} ⋅ {O}_{2}}^{2}$ combinations.

For another example, if the quantity of antenna ports of the antenna port subarray corresponding to the reference signal is *N*₁ in the first dimension, the oversampling factor is *O*₁, the quantity of antenna ports of the antenna port subarray corresponding to the reference signal is *N*₂ in the second dimension, the oversampling factor is *O*₂, and a quantity of joint basis vectors included in the third joint basis vector set is 4, the parameter selection rule indicated by the third indication information may be one of ${C}_{{N}_{1} ⋅ {O}_{1} ⋅ {N}_{2} ⋅ {O}_{2}}^{4}$ combinations.

The fourth indication information may indicate a joint basis vector corresponding to each precoding submatrix in the third joint basis vector set.

For example, if the precoding matrix includes two precoding submatrices, the fourth indication information may indicate joint basis vectors respectively corresponding to the two precoding submatrices.

The fourth indication information may include a fifth parameter. The fifth parameter indicates one joint basis vector in the third joint basis vector set.

In a possible implementation, the fourth indication information may be used for precoding matrices corresponding to a plurality of reference signals within an entire frequency domain range. In this case, the fourth indication information may be referred to as wideband precoding information. The fourth indication information may alternatively be used for precoding matrices corresponding to the plurality of reference signals in different frequency domain subbands within the frequency domain range. In this case, the fourth indication information may be referred to as subband precoding information. If the terminal device needs to report a plurality of pieces of subband precoding information, the terminal device may send a plurality of pieces of fourth indication information to the network device, and each piece of fourth indication information corresponds to one frequency domain subband. Further, the plurality of subband precoding information may be associated with same third indication information, that is, the terminal device may send one piece of third indication information and a plurality of pieces of fourth indication information to the network device, and each piece of fourth indication information corresponds to one frequency domain subband.

Although channels observed by different antenna ports are different, differences may not be very large. Therefore, beam directions of different precoding submatrices may belong to a same third joint basis vector set. Further, different precoding submatrices may select one joint basis vector from the third joint basis vector set, which reflects differences between different precoding submatrices. Reporting the third indication information and the fourth indication information helps reduce feedback overheads of the terminal device.

In a possible implementation, on a basis of reporting the third indication information and the fourth indication information, the terminal device may further report, to the network device, a phase difference between different precoding submatrices and/or a phase difference between a first precoding submatrix and a second precoding submatrix that are corresponding to each reference signal. Further, if the terminal device needs to report a plurality of pieces of subband precoding information, the terminal device may report a plurality of phase differences, and each phase difference corresponds to one frequency domain subband. The phase difference may be a phase difference between different precoding submatrices and/or a phase difference between a first precoding submatrix and a second precoding submatrix that are corresponding to each reference signal.

The third indication information and the fourth indication information related to the precoding matrix that are determined based on the first information are reported, so that the network device may perform precoding on a data channel transmitted via the plurality of antenna port subarrays, which facilitates improving data signal transmission efficiency.

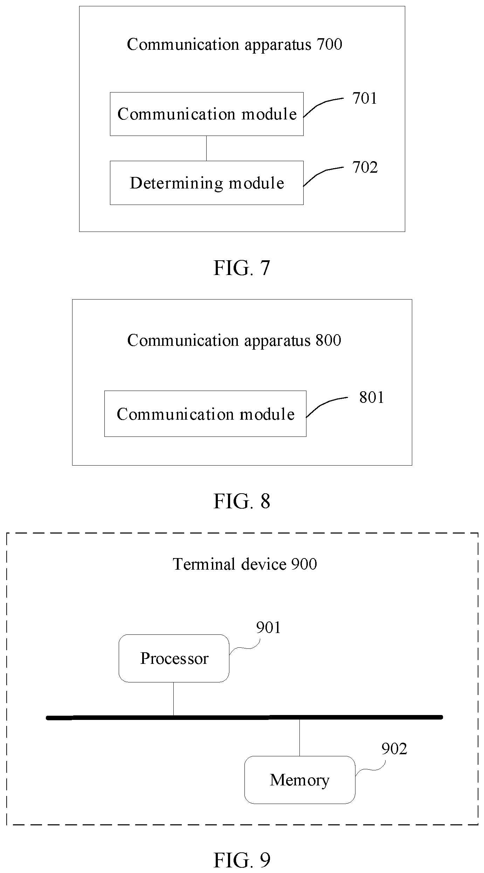

FIG. 7 is a schematic diagram of a structure of a communication apparatus according to an embodiment of this application. As shown in FIG. 7, the communication apparatus 700 includes: a communication module 701, configured to receive a plurality of reference signals; and a determining module 702, configured to determine a precoding matrix based on the plurality of reference signals.

In a possible implementation, the determining module 702 is specifically configured to determine the precoding matrix based on first information, where the first information indicates a first quantity of antenna ports corresponding to each reference signal in a first dimension and a second quantity of antenna ports corresponding to each reference signal in a second dimension.

In a possible implementation, the first quantity of antenna ports corresponding to each reference signal in the first dimension is the same, and/or the second quantity of antenna ports corresponding to each reference signal in the second dimension is the same.

In a possible implementation, the determining module 702 is specifically configured to: determine, based on the first information, a third quantity of antenna ports corresponding to the plurality of reference signals in the first dimension and a fourth quantity of antenna ports corresponding to the plurality of reference signals in the second dimension; determine a first joint basis vector set based on the third quantity and the fourth quantity; and determine the precoding matrix based on the first joint basis vector set.

In a possible implementation, the plurality of reference signals correspond to an antenna port array, and the antenna port array includes an antenna port subarray corresponding to each reference signal, where the third quantity is a quantity of antenna ports corresponding to the antenna port array in the first dimension, and the fourth quantity is a quantity of antenna ports corresponding to the antenna port array in the second dimension.

In a possible implementation, the antenna port array includes M₁ antenna port subarrays in the first dimension, the antenna port array includes M₂ antenna port subarrays in the second dimension, and M₁ and M₂ are respectively integers greater than or equal to 1, where the third quantity is a quantity of antenna ports of M₁ antenna port subarrays in the first dimension; and the fourth quantity is a quantity of antenna ports of M₂ antenna port subarrays in the second dimension.

In a possible implementation, the communication module 701 is further configured to receive a value of M₁ and a value of M₂.

In a possible implementation, the value of M₁ and the value of M₂ are predefined.

In a possible implementation, the communication module 701 is further configured to send first indication information related to the precoding matrix, where the first indication information indicates a joint basis vector corresponding to the precoding matrix.

In a possible implementation, the first indication information includes a first parameter and a second parameter, where the first parameter is determined based on the third quantity and oversampling factors of the plurality of reference signals in the first dimension; and the second parameter is determined based on the fourth quantity and oversampling factors of the plurality of reference signals in the second dimension.

In a possible implementation, the determining module 702 is specifically configured to: determine, based on the first information, a precoding submatrix corresponding to each reference signal; and determine that the precoding matrix includes the precoding submatrix corresponding to each reference signal.

In a possible implementation, each precoding submatrix is determined based on a second joint basis vector set corresponding to a corresponding reference signal; and the second joint basis vector set is determined based on a quantity of antenna ports of the reference signal in the first dimension and a quantity of antenna ports of the reference signal in the second dimension.

In a possible implementation, a precoding submatrix corresponding to each reference signal includes a first precoding submatrix corresponding to the reference signal and a second precoding submatrix corresponding to the reference signal. The first precoding submatrix and the second precoding submatrix are determined based on a same joint basis vector in a second joint basis vector set corresponding to the reference signal.

In a possible implementation, the communication module 701 is further configured to send second information related to the precoding matrix, where the second information includes at least one of the following: second indication information, where the second indication information indicates a joint basis vector corresponding to each precoding submatrix, and the joint basis vector corresponding to each precoding submatrix is a joint basis vector in the second joint basis vector set corresponding to a corresponding reference signal; a phase difference between different precoding submatrices; and a phase difference between the first precoding submatrix and the second precoding submatrix that are corresponding to each reference signal, where the first precoding submatrix and the second precoding submatrix are determined based on a same joint basis vector in the second joint basis vector set corresponding to the reference signal.

In a possible implementation, the second indication information includes a third parameter and a fourth parameter, where the third parameter is determined based on a quantity of antenna ports of the reference signal in the first dimension and an oversampling factor of the reference signal in the first dimension; and the fourth parameter is determined based on a quantity of antenna ports of the reference signal in the second dimension and an oversampling factor of the reference signal in the second dimension.

In a possible implementation, the phase difference between different precoding submatrices includes: a difference between a phase associated with an i^{th} precoding submatrix and a phase associated with a 1^{st} precoding submatrix, i is at least one of 2, 3, ..., and M, and M is a quantity of precoding submatrices included in the precoding matrix.

In a possible implementation, the communication module 701 is further configured to send third indication information and fourth indication information that are related to the precoding matrix, where the third indication information indicates a third joint basis vector set, the third joint basis vector set includes a plurality of joint basis vectors, and the third joint basis vector set includes a part of joint basis vectors in a second joint basis vector set corresponding to each reference signal; and the fourth indication information indicates a joint basis vector corresponding to each precoding submatrix in the third joint basis vector set.

In a possible implementation, there is a correspondence between the plurality of reference signals and a plurality of antenna port subarrays.

In a possible implementation, there is a correspondence between indexes of the plurality of reference signals and indexes of the plurality of antenna port subarrays.

In a possible implementation, there is a correspondence between receiving times of the plurality of reference signals and indexes of the plurality of antenna port subarrays.

In a possible implementation, the communication module 701 is specifically configured to receive the plurality of reference signals within preset duration.

In a possible implementation, the communication module 701 is specifically configured to receive the plurality of reference signals by using a same beam.

The communication apparatus 700 provided in this embodiment is configured to implement the technical solutions of the terminal device in the foregoing method embodiment. Implementation principles and technical effects thereof are similar, and details are not described herein again.

FIG. 8 is a schematic diagram of a structure of another communication apparatus according to an embodiment of this application. As shown in FIG. 8, the communication apparatus 800 includes: a communication module 801, configured to send a plurality of reference signals, where the plurality of reference signals are used for a terminal device to determine a precoding matrix.

In a possible implementation, the precoding matrix is determined based on first information corresponding to the plurality of reference signals, where the first information indicates a first quantity of antenna ports corresponding to each reference signal in a first dimension and a second quantity of antenna ports corresponding to each reference signal in a second dimension.

In a possible implementation, the first quantity of antenna ports corresponding to each reference signal in the first dimension is the same, and/or the second quantity of antenna ports corresponding to each reference signal in the second dimension is the same.

In a possible implementation, the precoding matrix is determined based on a first joint basis vector, and the first joint basis vector is determined based on a third quantity and a fourth quantity; the third quantity is a quantity of antenna ports corresponding to the plurality of reference signals in the first dimension that is determined based on the first information; and the fourth quantity is a quantity of antenna ports corresponding to the plurality of reference signals in the second dimension that is determined based on the first information.

In a possible implementation, the plurality of reference signals correspond to an antenna port array, and the antenna port array includes an antenna port subarray corresponding to each reference signal, where the third quantity is a quantity of antenna ports corresponding to the antenna port array in the first dimension, and the fourth quantity is a quantity of antenna ports corresponding to the antenna port array in the second dimension.

In a possible implementation, the antenna port array includes M₁ antenna port subarrays in the first dimension, the antenna port array includes M₂ antenna port subarrays in the second dimension, and M₁ and M₂ are respectively integers greater than or equal to 1, where the third quantity is a quantity of antenna ports of M₁ antenna port subarrays in the first dimension; and the fourth quantity is a quantity of antenna ports of M₂ antenna port subarrays in the second dimension.

In a possible implementation, the communication module 801 is further configured to send a value of M₁ and a value of M₂.

In a possible implementation, the value of M₁ and the value of M₂ are predefined.

In a possible implementation, the communication module 801 is further configured to receive first indication information related to the precoding matrix, where the first indication information indicates a joint basis vector corresponding to the precoding matrix.

In a possible implementation, the first indication information includes a first parameter and a second parameter, where the first parameter, the first parameter is determined based on the third quantity and oversampling factors of the plurality of reference signals in the first dimension; and the second parameter, the second parameter is determined based on the fourth quantity and oversampling factors of the plurality of reference signals in the second dimension.

In a possible implementation, the precoding matrix includes a precoding submatrix corresponding to each reference signal, where the precoding submatrix corresponding to each reference signal is determined based on the first information.

In a possible implementation, each precoding submatrix is determined based on a second joint basis vector corresponding to a corresponding reference signal; and the second joint basis vector is determined based on a quantity of antenna ports of the reference signal in the first dimension and a quantity of antenna ports of the reference signal in the second dimension.

In a possible implementation, a precoding submatrix corresponding to each reference signal includes a first precoding submatrix corresponding to the reference signal and a second precoding submatrix corresponding to the reference signal. The first precoding submatrix and the second precoding submatrix are determined based on a same joint basis vector in a second joint basis vector set corresponding to the reference signal.

In a possible implementation, the communication module 801 is further configured to receive second information related to the precoding matrix, where the second information includes at least one of the following: second indication information, where the second indication information indicates a joint basis vector corresponding to each precoding submatrix, and the joint basis vector corresponding to each precoding submatrix is a joint basis vector in the second joint basis vector set corresponding to a corresponding reference signal; a phase difference between different precoding submatrices; and a phase difference between the first precoding submatrix and the second precoding submatrix that are corresponding to each reference signal, where the first precoding submatrix and the second precoding submatrix are determined based on a same joint basis vector in the second joint basis vector set corresponding to the reference signal.

In a possible implementation, the second indication information includes a third parameter and a fourth parameter, where the third parameter, the third parameter is determined based on a quantity of antenna ports of the reference signal in the first dimension and an oversampling factor of the reference signal in the first dimension; and the fourth parameter, the fourth parameter is determined based on a quantity of antenna ports of the reference signal in the second dimension and an oversampling factor of the reference signal in the second dimension.

In a possible implementation, the phase difference between different precoding submatrices includes: a difference between a phase associated with an i^{th} precoding submatrix and a phase associated with a 1^{st} precoding submatrix, i is at least one of 2, 3, ..., and M, and M is a quantity of precoding submatrices included in the precoding matrix.

In a possible implementation, the communication module 801 is further configured to receive third indication information and fourth indication information that are related to the precoding matrix, where the third indication information indicates a third joint basis vector set, the third joint basis vector set includes a plurality of joint basis vectors, and the third joint basis vector set includes a part of joint basis vectors in a second joint basis vector set corresponding to each reference signal; and the fourth indication information indicates a joint basis vector corresponding to each precoding submatrix in the third joint basis vector set.

In a possible implementation, there is a correspondence between the plurality of reference signals and a plurality of antenna port subarrays.

In a possible implementation, there is a correspondence between indexes of the plurality of reference signals and indexes of the plurality of antenna port subarrays.

In a possible implementation, there is a correspondence between receiving times of the plurality of reference signals and indexes of the plurality of antenna port subarrays.

In a possible implementation, the communication module 801 is specifically configured to send the plurality of reference signals within preset duration.

The communication apparatus 800 provided in this embodiment is configured to implement the technical solutions of the network device in the foregoing method embodiment. Implementation principles and technical effects thereof are similar, and details are not described herein again.

FIG. 9 is a schematic diagram of a structure of a terminal device according to an embodiment of this application. As shown in FIG. 9, a terminal device 900, including: a processor 901 and a memory 902. The memory 902 stores computer-executable instructions. The processor 901 executes the computer-executable instructions stored in the memory 902, so that the terminal device executes the corresponding technical solutions in the foregoing method embodiment. Implementation principles and technical effects thereof are similar, and details are not described herein again.

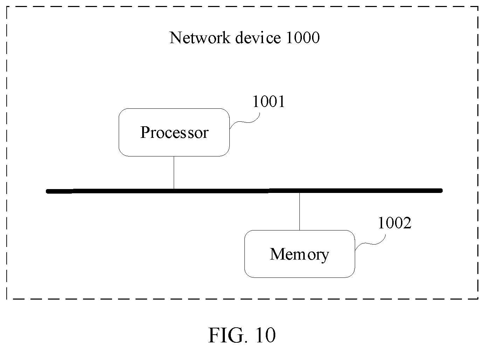

FIG. 10 is a schematic diagram of a structure of a network device according to an embodiment of this application. As shown in FIG. 10, a network device 1000, including: a processor 1001 and a memory 1002. The memory 1002 stores computer-executable instructions. The processor 1001 executes the computer-executable instructions stored in the memory 1002, so that the network device executes the corresponding technical solutions in the foregoing method embodiment. Implementation principles and technical effects thereof are similar, and details are not described herein again.

An embodiment of this application provides a chip. The chip includes a processor, and the processor is configured to invoke a computer program in a memory to perform the technical solutions in the foregoing embodiments. Implementation principles and technical effects of the chip are similar to those of the related embodiments, and details are not described herein again.

An embodiment of this application further provides a computer-readable storage medium. The computer-readable storage medium stores a computer program. When the computer program is executed by a processor, the method steps performed by the network device in the foregoing method embodiment are implemented.

An embodiment of this application further provides a computer-readable storage medium. The computer-readable storage medium stores a computer program. When the computer program is executed by a processor, the method steps performed by the terminal device in the foregoing method embodiment are implemented.

An embodiment of this application provides a computer program product, including a computer program. When the computer program is run, a computer is enabled to perform the method steps performed by the network device in the foregoing method embodiment.

An embodiment of this application provides a computer program product, including a computer program. When the computer program is run, a computer is enabled to perform the method steps performed by the terminal device in the foregoing method embodiment.

All or some of the methods described in the foregoing embodiments may be implemented by using software, hardware, firmware, or any combination thereof. If the methods are implemented through the software, a function may be stored on the computer-readable medium as one or more instructions or code or transmitted on the computer-readable medium. The computer-readable medium may include a computer storage medium and communication medium, and may also include any medium that can transfer a computer program from one place to another. The storage medium may be any target medium accessible by a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that aims to carry or store required program code in a form of an instruction or a data structure, and may be accessed by the computer. In addition, any connection is appropriately referred to as a computer-readable medium. For example, if software is transmitted from a website, a server or another remote source by using a coaxial cable, an optical fiber cable, a twisted pair, a digital subscriber line (digital subscriber line, DSL) or wireless technologies (such as infrared ray, radio, and microwave), the coaxial cable, the optical fiber cable, the twisted pair, the DSL, or the wireless technologies such as infrared, radio, and microwave are included in the definition of the medium. A disk and an optical disc used in this specification include an optical disc, a laser disk, a digital versatile disc (digital versatile disc, DVD), a floppy disk, and a blue-ray disc, where the disk generally reproduces data in a magnetic manner, while the optical disc optically reproduces data by using a laser. The foregoing combinations should also be included in the scope of the computer-readable medium.

The embodiments of this application are described with reference to flowcharts and/or block diagrams of the method and the device (system) according to the embodiments of this application. It should be understood that computer program instructions may be used to implement each procedure and/or each block in the flowcharts and/or the block diagrams and a combination of procedures and/or blocks in the flowcharts and/or the block diagrams. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more procedures in the flowcharts and/or in one or more blocks in the block diagrams.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, comprising:
receiving a plurality of reference signals; and
determining a precoding matrix based on the plurality of reference signals.

2. The method according to claim 1, wherein the determining a precoding matrix based on the plurality of reference signals comprises:
determining the precoding matrix based on first information, wherein
the first information indicates a first quantity of antenna ports corresponding to each reference signal in a first dimension and a second quantity of antenna ports corresponding to each reference signal in a second dimension.

3. The method according to claim 2, wherein
the first quantity of antenna ports corresponding to each reference signal in the first dimension is the same; and/or
the second quantity of antenna ports corresponding to each reference signal in the second dimension is the same.

4. The method according to claim 2 or 3, wherein the determining the precoding matrix based on first information comprises:
determining, based on the first information, a third quantity of antenna ports corresponding to the plurality of reference signals in the first dimension and a fourth quantity of antenna ports corresponding to the plurality of reference signals in the second dimension;
determining a first joint basis vector set based on the third quantity and the fourth quantity; and
determining the precoding matrix based on the first joint basis vector set.

5. The method according to claim 4, wherein the plurality of reference signals correspond to an antenna port array, and the antenna port array comprises an antenna port subarray corresponding to each reference signal, wherein
the third quantity is a quantity of antenna ports corresponding to the antenna port array in the first dimension; and
the fourth quantity is a quantity of antenna ports corresponding to the antenna port array in the second dimension.

6. The method according to claim 5, wherein the antenna port array comprises M₁ antenna port subarrays in the first dimension, the antenna port array comprises M₂ antenna port subarrays in the second dimension, and M₁ and M₂ are respectively integers greater than or equal to 1, wherein
the third quantity is a quantity of antenna ports of the M₁ antenna port subarrays in the first dimension; and
the fourth quantity is a quantity of antenna ports of the M₂ antenna port subarrays in the second dimension.

7. The method according to claim 6, wherein the method further comprises:
receiving a value of M₁ and a value of M₂.

8. The method according to claim 6, wherein
the value of M₁ and the value of M₂ are predefined.

9. The method according to any one of claims 5 to 8, wherein the method further comprises:
sending first indication information related to the precoding matrix, wherein the first indication information indicates a joint basis vector corresponding to the precoding matrix.

10. The method according to claim 9, wherein the first indication information comprises a first parameter and a second parameter, wherein
the first parameter is determined based on the third quantity and oversampling factors of the plurality of reference signals in the first dimension; and
the second parameter is determined based on the fourth quantity and oversampling factors of the plurality of reference signals in the second dimension.

11. The method according to claim 2 or 3, wherein the determining the precoding matrix based on first information comprises:
determining, based on the first information, a precoding submatrix corresponding to each reference signal; and
determining that the precoding matrix comprises the precoding submatrix corresponding to each reference signal.

12. The method according to claim 11, wherein
the precoding submatrix is determined based on a second joint basis vector set corresponding to the reference signal; and
the second joint basis vector set is determined based on a quantity of antenna ports of the reference signal in the first dimension and a quantity of antenna ports of the reference signal in the second dimension.

13. The method according to claim 11 or 12, wherein the precoding submatrix corresponding to the reference signal comprises a first precoding submatrix corresponding to the reference signal and a second precoding submatrix corresponding to the reference signal, and the first precoding submatrix and the second precoding submatrix are determined based on a same joint basis vector in the second joint basis vector set corresponding to the reference signal.

14. The method according to any one of claims 11 to 13, wherein the method further comprises:
sending second information related to the precoding matrix, wherein the second information comprises at least one of the following:
second indication information, wherein the second indication information indicates a joint basis vector corresponding to the precoding submatrix, and the joint basis vector corresponding to the precoding submatrix is a joint basis vector in the second joint basis vector set;
a phase difference between different precoding submatrices; and
a phase difference between the first precoding submatrix and the second precoding submatrix that are corresponding to the reference signal, wherein the first precoding submatrix and the second precoding submatrix are determined based on a same joint basis vector in the second joint basis vector set.

15. The method according to claim 14, wherein the second indication information comprises a third parameter and a fourth parameter, wherein
the third parameter is determined based on the quantity of antenna ports of the reference signal in the first dimension and an oversampling factor of the reference signal in the first dimension; and
the fourth parameter is determined based on the quantity of antenna ports of the reference signal in the second dimension and an oversampling factor of the reference signal in the second dimension.

16. The method according to claim 14 or 15, wherein the phase difference between different precoding submatrices comprises: a difference between a phase associated with an i^{th} precoding submatrix and a phase associated with a 1^{st} precoding submatrix, i is at least one of 2, 3, ..., and M, and M is a quantity of precoding submatrices comprised in the precoding matrix.

17. The method according to any one of claims 11 to 13, wherein the method further comprises:
sending third indication information and fourth indication information that are related to the precoding matrix, wherein
the third indication information indicates a third joint basis vector set, the third joint basis vector set comprises a plurality of joint basis vectors, and the third joint basis vector set comprises a part of joint basis vectors in a second joint basis vector set corresponding to each reference signal; and
the fourth indication information indicates a joint basis vector corresponding to the precoding submatrix in the third joint basis vector set.

18. The method according to any one of claims 1 to 17, wherein there is a correspondence between the plurality of reference signals and a plurality of antenna port subarrays.

19. The method according to claim 18, wherein there is a correspondence between indexes of the plurality of reference signals and indexes of the plurality of antenna port subarrays.

20. The method according to claim 18, wherein there is a correspondence between receiving times of the plurality of reference signals and indexes of the plurality of antenna port subarrays.

21. The method according to any one of claims 1 to 20, wherein the receiving a plurality of reference signals comprises:
receiving the plurality of reference signals within preset duration.

22. The method according to any one of claims 1 to 21, wherein the receiving a plurality of reference signals comprises:
receiving the plurality of reference signals by using a same beam.

23. A communication method, comprising:
sending a plurality of reference signals, wherein the plurality of reference signals are used for a terminal device to determine a precoding matrix.

24. The method according to claim 23, wherein the plurality of reference signals correspond to an antenna port array, and the antenna port array comprises an antenna port subarray corresponding to each reference signal, wherein
a third quantity is a quantity of antenna ports corresponding to the antenna port array in the first dimension; and
a fourth quantity is a quantity of antenna ports corresponding to the antenna port array in the second dimension.

25. The method according to claim 24, wherein the antenna port array comprises M₁ antenna port subarrays in the first dimension, the antenna port array comprises M₂ antenna port subarrays in the second dimension, and M₁ and M₂ are respectively integers greater than or equal to 1, wherein
the third quantity is a quantity of antenna ports of the M₁ antenna port subarrays in the first dimension; and
the fourth quantity is a quantity of antenna ports of the M₂ antenna port subarrays in the second dimension.

26. The method according to claim 25, wherein the method further comprises:
sending a value of M₁ and a value of M₂.

27. The method according to claim 25, wherein
a value of M₁ and a value of M₂ are predefined.

28. The method according to any one of claims 24 to 27, wherein the method further comprises:
receiving first indication information related to the precoding matrix, wherein the first indication information indicates a joint basis vector corresponding to the precoding matrix.

29. The method according to claim 28, wherein the first indication information comprises a first parameter and a second parameter, wherein
the first parameter is determined based on the third quantity and oversampling factors of the plurality of reference signals in the first dimension; and
the second parameter is determined based on the fourth quantity and oversampling factors of the plurality of reference signals in the second dimension.

30. The method according to claim 23, wherein the method further comprises:
receiving second information related to the precoding matrix, wherein the second information comprises at least one of the following:
second indication information, wherein the second indication information indicates a joint basis vector corresponding to a precoding submatrix corresponding to each reference signal, the joint basis vector corresponding to the precoding submatrix is a joint basis vector in a second joint basis vector set, and the second joint basis vector set is determined based on a quantity of antenna ports of the reference signal in the first dimension and a quantity of antenna ports of the reference signal in the second dimension;
a phase difference between different precoding submatrices; and
a phase difference between a first precoding submatrix and a second precoding submatrix that are corresponding to the reference signal, wherein the first precoding submatrix and the second precoding submatrix are determined based on a same joint basis vector in the second joint basis vector set.

31. The method according to claim 30, wherein the second indication information comprises a third parameter and a fourth parameter, wherein
the third parameter is determined based on the quantity of antenna ports of the reference signal in the first dimension and an oversampling factor of the reference signal in the first dimension; and
the fourth parameter is determined based on the quantity of antenna ports of the reference signal in the second dimension and an oversampling factor of the reference signal in the second dimension.

32. The method according to claim 30 or 31, wherein the phase difference between different precoding submatrices comprises: a difference between a phase associated with an i^{th} precoding submatrix and a phase associated with a 1^{st} precoding submatrix, i is at least one of 2, 3, ..., and M, and M is a quantity of precoding submatrices comprised in the precoding matrix.

33. The method according to claim 23, wherein the method further comprises:
receiving third indication information and fourth indication information that are related to the precoding matrix, wherein
the third indication information indicates a third joint basis vector set, the third joint basis vector set comprises a plurality of joint basis vectors, and the third joint basis vector set comprises a part of joint basis vectors in a second joint basis vector set corresponding to each reference signal; and
the fourth indication information indicates a joint basis vector corresponding to each precoding submatrix in the third joint basis vector set.

34. The method according to any one of claims 23 to 33, wherein there is a correspondence between the plurality of reference signals and a plurality of antenna port subarrays.

35. The method according to claim 34, wherein there is a correspondence between indexes of the plurality of reference signals and indexes of the plurality of antenna port subarrays.

36. The method according to claim 34, wherein there is a correspondence between receiving times of the plurality of reference signals and indexes of the plurality of antenna port subarrays.

37. The method according to any one of claims 23 to 36, wherein the sending a plurality of reference signals comprises:
sending the plurality of reference signals within preset duration.

38. A terminal device, comprising a processor and a memory, wherein
the memory stores computer-executable instructions; and
the processor executes the computer-executable instructions stored in the memory, to enable the terminal device to perform the method according to any one of claims 1 to 22.

39. A network device, comprising: a processor and a memory, wherein
the memory stores computer-executable instructions; and
the processor executes the computer-executable instructions stored in the memory, to enable the network device to perform the method according to any one of claims 23 to 37.

40. A computer-readable storage medium, the computer-readable storage medium storing a computer program, wherein when the computer program is executed by a processor, the method according to any one of claims 1 to 22 or the method according to any one of claims 23 to 37 is implemented.
